(19) Europäisches Patentamt / European Patent Office / Office européen des brevets

(11) **EP 4 451 598 A1**

(12) **EUROPEAN PATENT APPLICATION**
published in accordance with Art. 153(4) EPC

(43) Date of publication:
**23.10.2024 Bulletin 2024/43**

(21) Application number: **23739957.1**

(22) Date of filing: **09.01.2023**

(51) International Patent Classification (IPC):
**H04L 5/00** (2006.01)    **H04W 24/08** (2009.01)

(52) Cooperative Patent Classification (CPC):
**H04L 5/00; H04W 24/08; H04W 24/10**

(86) International application number:
**PCT/CN2023/071218**

(87) International publication number:
**WO 2023/134615 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.01.2022 CN 202210043549**

(71) Applicant: **Huawei Technologies Co., Ltd.**
**Shenzhen, Guangdong 518129 (CN)**

(72) Inventors:
• **SUN, Li**
  **Shenzhen, Guangdong 518129 (CN)**
• **LIU, Peng**
  **Shenzhen, Guangdong 518129 (CN)**
• **WANG, Yuwei**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **COMMUNICATION METHOD AND COMMUNICATION APPARATUS**

(57) Embodiments of this application disclose a communication method and a communication apparatus. The method includes: A first communication apparatus receives a measurement signal from a second communication apparatus. The first communication apparatus sends measurement evaluation information to the second communication apparatus. The measurement evaluation information indicates reliability of a measurement result due to a first cause, or the measurement evaluation information indicates that the measurement result is unavailable due to the first cause. The measurement result is obtained based on the measurement signal. In embodiments of this application, the first communication apparatus sends the measurement evaluation information to the second communication apparatus, where the measurement evaluation information indicates the reliability of the measurement result due to the first cause or indicates that the measurement result is unavailable due to the first cause. In this way, the measurement result can be more completely evaluated, and the second communication apparatus can learn of a cause for the unavailable measurement result.

FIG. 4

## Description

This application claims priority to Chinese Patent Application No. 202210043549.3, filed with the China National Intellectual Property Administration on January 14, 2022 and entitled "COMMUNICATION METHOD AND COMMUNICATION APPARATUS", which is incorporated herein by reference in its entirety.

## TECHNICAL FIELD

This application relates to the communications field, and in particular, to a communication method and a communication apparatus.

## BACKGROUND

With rapid development of mobile communication and Internet technologies, people's demands for location services are increasing. A secure ranging-based positioning technology by which a wireless device estimates a distance between the wireless device and another device in a secure manner is an important technology in the field of communication sensing, and is highly concerned by the International Organization for Standardization. For example, the Institute of Electrical and Electronics Engineers (Institute of Electrical and Electronics Engineers, IEEE) 802.15.4z (UWB) aims to standardize a ranging communication process and determine locations of devices through secure ranging and exchange of ranging results. Specifically, two devices each send a ranging sequence to learn of a distance between the two devices, to perform high-precision location estimation. This technology is widely needed and applied in the fields of personnel positioning in factories, goods positioning in logistics and warehousing, intelligent sensing of a vehicle door lock, and the like. While a demand for positioning and ranging is increasing rapidly, a security problem also emerges, and attracts wide attention.

In an actual wireless environment, due to impact of factors such as multipath, noise, and interference, a distance estimated by a ranging device to another device is usually deviated and different from an actual value. In addition, there are a plurality of attacks against a ranging process in reality, where a distance-reduction attack (distance-reduction attack) is a common attack. The distance-reduction attack may be implemented in a plurality of forms, such as a Cicada attack, a Cicada++ attack, a Ghost Peak attack, and the like. In the foregoing attack forms, when an actual distance between two ranging parties is very long, the distance may be falsely considered to be very short. A measurement result obtained by performing ranging by a ranging device may not truly reflect a distance between the ranging device and another device. In addition, in practice, another measurement result, for example, an angle of arrival (angle of arrival, AOA), obtained through measurement by a communication apparatus may also be inaccurate. Therefore, it is necessary to provide a solution to evaluate the measurement results, to avoid using inaccurate measurement results.

## SUMMARY

Embodiments of this application disclose a communication method and a communication apparatus, to evaluate a measurement result more completely.

According to a first aspect, an embodiment of this application provides a communication method. The method includes: A first communication apparatus receives a measurement signal from a second communication apparatus. The first communication apparatus sends measurement evaluation information to the second communication apparatus. The measurement evaluation information indicates reliability of a measurement result due to a first cause, or the measurement evaluation information indicates that the measurement result is unavailable due to the first cause. The measurement result is obtained based on the measurement signal.

In this embodiment of this application, the first communication apparatus sends the measurement evaluation information to the second communication apparatus, where the measurement evaluation information indicates the reliability of the measurement result due to the first cause or indicates that the measurement result is unavailable due to the first cause. In this way, the measurement result can be more completely evaluated, and the second communication apparatus can learn of a cause for the unavailable measurement result.

In a possible implementation, the first cause includes: Communication interference occurs in a process in which the first communication apparatus measures a first parameter based on the measurement signal.

In this implementation, the first cause includes: The communication interference occurs in the process in which the first communication apparatus measures the first parameter based on the measurement signal, so that the second communication apparatus learns, based on the received measurement evaluation information, that the communication interference occurring in the process in which the first communication apparatus measures the first parameter based on the measurement signal causes unavailability of the measurement result or the reliability of the measurement result.

In a possible implementation, the first cause is that the communication interference occurs in the process in which the first communication apparatus measures the first parameter based on the measurement signal.

In this implementation, the first cause is that the communication interference occurs in the process in which the first communication apparatus measures the first parameter based on the measurement signal, so that the second communication apparatus learns that the communication interference occurring in the process in which the first communication apparatus measures the first parameter based on the measurement signal causes the unavailability of the measurement result or the reliability of the measurement result.

In a possible implementation, that the communication interference occurs in the process in which the first communication apparatus measures the first parameter based on the measurement signal includes: The process in which the first communication apparatus measures the first parameter based on the measurement signal is interfered with by a first signal and/or a second signal. The first signal is to interfere with measurement of the first parameter, and the second signal is not to interfere with the measurement of the first parameter.

In this implementation, the process in which the first communication apparatus measures the first parameter based on the measurement signal is interfered with by the first signal and/or the second signal, so that various cases in which the measurement of the first parameter is interfered can be covered, thereby having high applicability.

In a possible implementation, the measurement evaluation information indicates the reliability of the measurement result due to the first cause. The measurement evaluation information includes a first field and a second field. The first field indicates that the measurement result is available, and the second field indicates the reliability.

In this implementation, the first field indicates that the measurement result is available, and the second field indicates the reliability of the measurement result. This may accurately indicate whether the measurement result is available and the reliability of the measurement result.

In a possible implementation, the first field is 0, 1, or a first binary sequence. The first binary sequence includes two or more bits. M bits in the second field are a binary representation of the reliability, where M is an integer greater than 0.

In this implementation, the first field is 0, 1, or a first binary sequence, and the M bits in the second field are a binary representation of the reliability. This can accurately indicate the reliability of the measurement result, and few bits are occupied.

In a possible implementation, the measurement evaluation information indicates that the measurement result is unavailable due to the first cause, and the measurement evaluation information includes a first field. The first field indicates that the measurement result is unavailable, and the first field is 0, 1, or a second binary sequence, where the second binary sequence includes two or more bits.

In this implementation, the first field indicates that the measurement result is unavailable, and the first field is 0, 1, or the second binary sequence. The first field may be used to accurately indicate that the measurement result is unavailable, and few bits are occupied.

In a possible implementation, the measurement evaluation information indicates that the measurement result is unavailable due to the first cause, and the measurement evaluation information includes a first field and a second field. The first field indicates that the measurement result is unavailable, and the first field is 0, 1, or a second binary sequence. The second binary sequence includes two or more bits, and a plurality of bits included in the second field are all 0.

In this implementation, the first field indicates that the measurement result is unavailable, and the first field is 0, 1, or the second binary sequence. The first field may be used to accurately indicate that the measurement result is unavailable, and few bits are occupied. The second field indicates that the reliability of the measurement result is the lowest value, and clearly indicates that the measurement result is unavailable due to the first cause.

In a possible implementation, the measurement evaluation information indicates the reliability of the measurement result due to the first cause, and the measurement evaluation information includes a figure of merit of the measurement result. An eighth bit of the figure of merit is 1, a first bit to a seventh bit of the figure of merit indicate the reliability, and the first bit to the seventh bit are not all 0.

In this implementation, the measurement evaluation information includes the figure of merit of the measurement result. The eighth bit of the figure of merit is 1, and the first bit to the seventh bit of the figure of merit indicate the reliability. The measurement result can be evaluated more completely by extending the existing FoM without defining a new message or field.

In a possible implementation, the measurement evaluation information indicates that the measurement result is unavailable due to the first cause, and the measurement evaluation information includes a figure of merit of the measurement result. An eighth bit of the figure of merit is 1, and a first bit to a seventh bit of the figure of merit are all 0.

In this implementation, the measurement evaluation information includes the figure of merit of the measurement result. The eighth bit of the figure of merit is 1, and the first bit to the seventh bit of the figure of merit are all 0, so that the existing FoM not only indicates that the measurement result is unavailable, but also indicates a cause for the unavailable measurement result.

In a possible implementation, the measurement evaluation information is carried in multiple access control (multiple access control, MAC) layer signaling. It may be understood that sending of the measurement evaluation information to the second communication apparatus by the first communication apparatus may be that the first communication apparatus sends, to the second communication apparatus, a MAC layer signal that includes the measurement evaluation information.

In this implementation, the measurement evaluation information is carried in the MAC layer signaling, so that exchange of the measurement evaluation information can be implemented, to optimize a measurement process.

In a possible implementation, the measurement evaluation information is carried in a ranging measurement information (ranging measurement information, RMI) information element (information element, IE).

In this implementation, the measurement evaluation information is carried in the RMI IE, so that the RMI IE can provide more complete ranging-related information.

In a possible implementation, the RMI IE includes a first indication, and the first indication indicates that the RMI IE includes the measurement evaluation information.

In this implementation, the first indication indicates that the RMI IE includes the measurement evaluation information, to determine, based on the first indication, whether the RMI IE includes the measurement evaluation information. Optionally, the first indication occupies one bit. For example, the first indication being 1 indicates that the RMI IE includes the measurement evaluation information; or the first indication is 0, and the first indication indicates that the RMI IE does not include the measurement evaluation information.

In a possible implementation, after the first communication apparatus receives the measurement signal from the second communication apparatus, the method further includes: The first communication apparatus performs an integrity check on the measurement signal to obtain an integrity check score. The integrity check score is positively correlated with integrity of the measurement signal. The first communication apparatus determines the reliability based on the integrity check score. The reliability is positively correlated with the integrity check score.

In this implementation, the first communication apparatus accurately determines the reliability of the measurement result based on the integrity check score.

In a possible implementation, the measurement evaluation information indicates the reliability of the measurement result due to the first cause. The measurement evaluation information includes the first field and the second field. The first field indicates that the measurement result is available, and the second field indicates the reliability. A length of an STS sequence of the measurement signal is x, a value range of the integrity check score is an integer between 1 and x (including 1 and x), a value range of the reliability is an integer between 0 and (x-1), and a value range of the M bits in the second field is an integer between 0 and (x-1).

In this implementation, the value range of the reliability of the measurement result is the same as the value range of the M bits in the second field, and the M bits in the second field may implement a binary representation of the reliability, and occupy few bits.

In a possible implementation, the measurement evaluation information includes the figure of merit of the measurement result. The eighth bit of the figure of merit is 1, and the first bit to the seventh bit of the figure of merit indicate the reliability. The length of the STS sequence of the ranging signal is x, a value range of the integrity check score is an integer between 1 and (x-1), and a value range of the reliability is an integer between 1 and (x-1). For example, x is 128.

In this implementation, the value range of the reliability of the measurement result is the same as the value range of the M bits in the second field, and the M bits in the second field may implement a binary representation of the reliability, and occupy few bits.

In a possible implementation, the measurement signal is used to measure the first parameter between the first communication apparatus and the second communication apparatus. The measurement evaluation information is used by the second communication apparatus to adjust a process in which the first parameter is measured.

In this implementation, the measurement evaluation information is used by the second communication apparatus to adjust the process in which the first parameter is measured. It can be learned that the measurement evaluation information facilitates optimizing, by the second communication apparatus, the process of measuring the first parameter, to obtain a more reliable measurement result through measurement, that is, a measurement result with higher reliability.

In a possible implementation, the measurement signal is a ranging signal, and the measurement signal is used to measure a distance between the first communication apparatus and the second communication apparatus.

In a possible implementation, the measurement signal is used to measure an angle of arrival (angle of arrival, AoA) between the first communication apparatus and the second communication apparatus.

According to a second aspect, an embodiment of this application provides another communication method. The method includes: A second communication apparatus sends a measurement signal to a first communication apparatus. The second communication apparatus receives measurement evaluation information from the first communication apparatus. The measurement evaluation information indicates reliability of a measurement result due to a first cause, or the measurement evaluation information indicates that the measurement result is unavailable due to the first cause. The measurement result is obtained based on the measurement signal.

In this embodiment of this application, the second communication apparatus receives the measurement evaluation information from the first communication apparatus, where the measurement evaluation information indicates the reliability of the measurement result due to the first cause or indicates that the measurement result is unavailable due to the first cause. In this way, the measurement result can be more completely evaluated, and the second communication apparatus can learn of a cause for the unavailable measurement result.

In a possible implementation, the first cause includes: Communication interference occurs in a process in which the first communication apparatus measures a first parameter based on the measurement signal.

In this implementation, the first cause includes: The communication interference occurs in the process in which the first communication apparatus measures the first parameter based on the measurement signal, so that the second communication apparatus learns, based on the received measurement evaluation information, that the communication interference occurring in the process in which the first communication apparatus measures the first parameter based on the measurement signal causes unavailability of the measurement result or the reliability of the measurement result.

In a possible implementation, the first cause is that the communication interference occurs in the process in which the first communication apparatus measures the first parameter based on the measurement signal.

In this implementation, the first cause is that the communication interference occurs in the process in which the first communication apparatus measures the first parameter based on the measurement signal, so that the second communication apparatus learns that the communication interference occurring in the process in which the first communication apparatus measures the first parameter based on the measurement signal causes the unavailability of the measurement result or the reliability of the measurement result.

In a possible implementation, that the communication interference occurs in the process in which the first communication apparatus measures the first parameter based on the measurement signal includes: The process in which the first communication apparatus measures the first parameter based on the measurement signal is interfered with by a first signal and/or a second signal. The first signal is to interfere with measurement of the first parameter, and the second signal is not to interfere with the measurement of the first parameter.

In this implementation, the process in which the first communication apparatus measures the first parameter based on the measurement signal is interfered with by the first signal and/or the second signal, so that various cases in which the measurement of the first parameter is interfered can be covered, thereby having high applicability.

In a possible implementation, the measurement evaluation information indicates the reliability of the measurement result due to the first cause. The measurement evaluation information includes a first field and a second field. The first field indicates that the measurement result is available, and the second field indicates the reliability.

In this implementation, the first field indicates that the measurement result is available, and the second field indicates the reliability of the measurement result. This may accurately indicate whether the measurement result is available and the reliability of the measurement result.

In a possible implementation, the first field is 0, 1, or a first binary sequence. The first binary sequence includes two or more bits. M bits in the second field are a binary representation of the reliability, where M is an integer greater than 0.

In this implementation, the first field is 0, 1, or a first binary sequence, and the M bits in the second field are a binary representation of the reliability. This can accurately indicate the reliability of the measurement result, and few bits are occupied.

In a possible implementation, the measurement evaluation information indicates that the measurement result is unavailable due to the first cause, and the measurement evaluation information includes a first field. The first field indicates that the measurement result is unavailable, and the first field is 0, 1, or a second binary sequence, where the second binary sequence includes two or more bits.

In this implementation, the first field indicates that the measurement result is unavailable, and the first field is 0, 1, or the second binary sequence. The first field may be used to accurately indicate that the measurement result is unavailable, and few bits are occupied.

In a possible implementation, the measurement evaluation information indicates that the measurement result is unavailable due to the first cause, and the measurement evaluation information includes a first field and a second field. The first field indicates that the measurement result is unavailable, and the first field is 0, 1, or a second binary sequence. The second binary sequence includes two or more bits, and a plurality of bits included in the second field are all 0.

In this implementation, the first field indicates that the measurement result is unavailable, and the first field is 0, 1, or the second binary sequence. The first field may be used to accurately indicate that the measurement result is unavailable, and few bits are occupied. The second field indicates that the reliability of the measurement result is the lowest value, and clearly indicates that the measurement result is unavailable due to the first cause.

In a possible implementation, the measurement evaluation information indicates the reliability of the measurement result due to the first cause, and the measurement evaluation information includes a figure of merit of the measurement result. An eighth bit of the figure of merit is 1, a first bit to a seventh bit of the figure of merit indicate the reliability, and the first bit to the seventh bit are not all 0.

In this implementation, the measurement evaluation information includes the figure of merit of the measurement result. The eighth bit of the figure of merit is 1, and the first bit to the seventh bit of the figure of merit indicate the reliability.

The measurement result can be evaluated more completely by extending the existing FoM without defining a new message or field.

In a possible implementation, the measurement evaluation information indicates that the measurement result is unavailable due to the first cause, and the measurement evaluation information includes a figure of merit of the measurement result. An eighth bit of the figure of merit is 1, and a first bit to a seventh bit of the figure of merit are all 0.

In this implementation, the measurement evaluation information includes the figure of merit of the measurement result. The eighth bit of the figure of merit is 1, and the first bit to the seventh bit of the figure of merit are all 0, so that the existing FoM not only indicates that the measurement result is unavailable, but also indicates a cause for the unavailable measurement result.

In a possible implementation, the measurement evaluation information is carried in MAC layer signaling. It may be understood that sending of the measurement evaluation information to the second communication apparatus by the first communication apparatus may be that the first communication apparatus sends, to the second communication apparatus, a MAC layer signal that includes the measurement evaluation information.

In this implementation, the measurement evaluation information is carried in the MAC layer signaling, so that exchange of the measurement evaluation information can be implemented, to optimize a measurement process.

In a possible implementation, the measurement evaluation information is carried in an RMIIE.

In this implementation, the measurement evaluation information is carried in the RMI IE, so that the RMI IE can provide more complete ranging-related information.

In a possible implementation, the RMI IE includes a first indication, and the first indication indicates that the RMI IE includes the measurement evaluation information.

In this implementation, the first indication indicates that the RMI IE includes the measurement evaluation information, to determine, based on the first indication, whether the RMI IE includes the measurement evaluation information. Optionally, the first indication occupies one bit. For example, the first indication being 1 indicates that the RMI IE includes the measurement evaluation information; or the first indication is 0, and the first indication indicates that the RMI IE does not include the measurement evaluation information.

In a possible implementation, after the first communication apparatus receives the measurement signal from the second communication apparatus, the method further includes: The first communication apparatus performs an integrity check on the measurement signal to obtain an integrity check score. The integrity check score is positively correlated with integrity of the measurement signal. The first communication apparatus determines the reliability based on the integrity check score. The reliability is positively correlated with the integrity check score.

In this implementation, the first communication apparatus accurately determines the reliability of the measurement result based on the integrity check score.

In a possible implementation, the measurement evaluation information indicates the reliability of the measurement result due to the first cause. The measurement evaluation information includes the first field and the second field. The first field indicates that the measurement result is available, and the second field indicates the reliability. A length of an STS sequence of the measurement signal is x, a value range of the integrity check score is an integer between 1 and x (including 1 and x), a value range of the reliability is an integer between 0 and (x-1), and a value range of the M bits in the second field is an integer between 0 and (x-1).

In this implementation, the value range of the reliability of the measurement result is the same as the value range of the M bits in the second field, and the M bits in the second field may implement a binary representation of the reliability, and occupy few bits.

In a possible implementation, the measurement evaluation information includes the figure of merit of the measurement result. The eighth bit of the figure of merit is 1, and the first bit to the seventh bit of the figure of merit indicate the reliability. The length of the STS sequence of the ranging signal is x, a value range of the integrity check score is an integer between 1 and (x-1), and a value range of the reliability is an integer between 1 and (x-1). For example, x is 128.

In this implementation, the value range of the reliability of the measurement result is the same as the value range of the M bits in the second field, and the M bits in the second field may implement a binary representation of the reliability, and occupy few bits.

In a possible implementation, the measurement signal is used to measure the first parameter between the first communication apparatus and the second communication apparatus. The measurement evaluation information is used by the second communication apparatus to adjust a process in which the first parameter is measured.

In this implementation, the measurement evaluation information is used by the second communication apparatus to adjust the process in which the first parameter is measured. It can be learned that the measurement evaluation information facilitates optimizing, by the second communication apparatus, the process of measuring the first parameter, to obtain a more reliable measurement result through measurement, that is, a measurement result with higher reliability.

In a possible implementation, the measurement signal is a ranging signal, and the measurement signal is used to measure a distance between the first communication apparatus and the second communication apparatus.

In a possible implementation, the measurement signal is used to measure an AoA between the first communication apparatus and the second communication apparatus.

In a possible implementation, the measurement signal is used to measure the first parameter between the first communication apparatus and the second communication apparatus. The method further includes: The second communication apparatus adjusts, based on the measurement evaluation information, a process in which the first parameter is measured, to obtain a new measurement result.

In this implementation, the second communication apparatus adjusts, based on the measurement evaluation information, the process in which the first parameter is measured, to obtain the new measurement result, so that a more reliable (or more accurate) measurement result may be obtained.

In a possible implementation, that the second communication apparatus adjusts, based on the measurement evaluation information, the process in which the first parameter is measured, to obtain the new measurement result includes: When the reliability is lower than a first threshold, the second communication apparatus discards the measurement result, and performs measurement to obtain a new measurement result.

In this implementation, when the reliability of the measurement result is lower than the first threshold, the second communication apparatus discards the measurement result, and performs measurement to obtain the new measurement result. This can avoid performing an incorrect operation based on the unreliable or unavailable measurement result.

In a possible implementation, the measurement signal is used to measure the first parameter between the first communication apparatus and the second communication apparatus. The method further includes: When determining that reliability of each of a plurality of consecutive measurement results is lower than the first threshold, the second communication apparatus terminates or suspends the process in which the first parameter is measured. The plurality of measurement results are all obtained by measuring the first parameter between the first communication apparatus and the second communication apparatus.

In this implementation, after determining that the reliability of each of the plurality of consecutive measurement results is lower than the first threshold, the second communication apparatus terminates or suspends the process in which the first parameter is measured. This can reduce a power waste.

In a possible implementation, the reliability is obtained by the first communication apparatus based on an integrity check score of the measurement signal. The reliability is positively correlated with the integrity check score, and the integrity check score is positively correlated with integrity of the measurement signal.

In this implementation, the reliability of the measurement result is obtained by the first communication apparatus based on the integrity check score of the measurement signal. The reliability may accurately reflect quality of the measurement result or a degree of trustworthiness of the measurement result.

According to a third aspect, an embodiment of this application provides a communication apparatus. The communication apparatus has a function of implementing actions in the method embodiment in the first aspect. The function may be implemented by hardware, or may be implemented by hardware executing corresponding software. The hardware or software includes one or more modules or units that correspond to the foregoing function. In a possible implementation, the communication apparatus includes: a receiving unit, configured to receive a measurement signal from a second communication apparatus; and a sending unit, configured to send measurement evaluation information to the second communication apparatus. The measurement evaluation information indicates reliability of a measurement result due to a first cause, or the measurement evaluation information indicates that the measurement result is unavailable due to the first cause. The measurement result is obtained based on the measurement signal.

In a possible implementation, the communication apparatus further includes: a processing unit, configured to perform an integrity check on the measurement signal to obtain an integrity check score, where the integrity check score is positively correlated with integrity of the measurement signal; and the processing unit is further configured to determine the reliability based on the integrity check score, where the reliability is positively correlated with the integrity check score.

In a possible implementation, the first cause includes: Communication interference occurs in a process in which the first communication apparatus measures a first parameter based on the measurement signal.

In a possible implementation, the first cause is that the communication interference occurs in the process in which the first communication apparatus measures the first parameter based on the measurement signal.

In a possible implementation, that the communication interference occurs in the process in which the first communication apparatus measures the first parameter based on the measurement signal includes: The process in which the first communication apparatus measures the first parameter based on the measurement signal is interfered with by a first signal and/or a second signal. The first signal is to interfere with measurement of the first parameter, and the second signal is not to interfere with the measurement of the first parameter.

In a possible implementation, the measurement evaluation information indicates the reliability of the measurement result due to the first cause. The measurement evaluation information includes a first field and a second field. The first field indicates that the measurement result is available, and the second field indicates the reliability.

In a possible implementation, the first field is 0, 1, or a first binary sequence. The first binary sequence includes two or more bits. M bits in the second field are a binary representation of the reliability, where M is an integer greater than 0.

In a possible implementation, the measurement evaluation information indicates that the measurement result is unavailable due to the first cause, and the measurement evaluation information includes a first field. The first field indicates that the measurement result is unavailable, and the first field is 0, 1, or a second binary sequence, where the second binary sequence includes two or more bits.

In a possible implementation, the measurement evaluation information indicates that the measurement result is unavailable due to the first cause, and the measurement evaluation information includes a first field and a second field. The first field indicates that the measurement result is unavailable, and the first field is 0, 1, or a second binary sequence. The second binary sequence includes two or more bits, and a plurality of bits included in the second field are all 0.

In a possible implementation, the measurement evaluation information indicates the reliability of the measurement result due to the first cause, and the measurement evaluation information includes a figure of merit of the measurement result. An eighth bit of the figure of merit is 1, a first bit to a seventh bit of the figure of merit indicate the reliability, and the first bit to the seventh bit are not all 0.

In a possible implementation, the measurement evaluation information indicates that the measurement result is unavailable due to the first cause, and the measurement evaluation information includes a figure of merit of the measurement result. An eighth bit of the figure of merit is 1, and a first bit to a seventh bit of the figure of merit are all 0.

In a possible implementation, the measurement evaluation information is carried in MAC layer signaling.

In a possible implementation, the measurement evaluation information is carried in an RMIIE.

In a possible implementation, the RMI IE includes a first indication, and the first indication indicates that the RMI IE includes the measurement evaluation information.

In a possible implementation, the measurement evaluation information indicates the reliability of the measurement result due to the first cause. The measurement evaluation information includes the first field and the second field. The first field indicates that the measurement result is available, and the second field indicates the reliability. A length of an STS sequence of the measurement signal is x, a value range of the integrity check score is an integer between 1 and x (including 1 and x), a value range of the reliability is an integer between 0 and (x-1), and a value range of the M bits in the second field is an integer between 0 and (x-1).

In a possible implementation, the measurement evaluation information includes the figure of merit of the measurement result. The eighth bit of the figure of merit is 1, and the first bit to the seventh bit of the figure of merit indicate the reliability. The length of the STS sequence of the ranging signal is x, a value range of the integrity check score is an integer between 1 and (x-1), and a value range of the reliability is an integer between 1 and (x-1). For example, x is 128.

In a possible implementation, the measurement signal is used to measure the first parameter between the first communication apparatus and the second communication apparatus. The measurement evaluation information is used by the second communication apparatus to adjust a process in which the first parameter is measured.

In a possible implementation, the measurement signal is a ranging signal, and the measurement signal is used to measure a distance between the first communication apparatus and the second communication apparatus.

In a possible implementation, the measurement signal is used to measure an AoA between the first communication apparatus and the second communication apparatus.

For technical effects brought by the third aspect or the possible implementations of the third aspect, refer to descriptions of technical effects of the first aspect or the possible implementations of the first aspect.

According to a fourth aspect, an embodiment of this application provides a communication apparatus. The communication apparatus has a function of implementing actions in the method embodiment in the second aspect. The function may be implemented by hardware, or may be implemented by hardware executing corresponding software. The hardware or software includes one or more modules or units that correspond to the foregoing function. In a possible implementation, the communication apparatus includes: a sending unit, configured to send a measurement signal to a first communication apparatus; and a receiving unit, configured to receive measurement evaluation information from the first communication apparatus, where the measurement evaluation information indicates reliability of a measurement result due to a first cause, or the measurement evaluation information indicates that the measurement result is unavailable due to the first cause, and the measurement result is obtained based on the measurement signal.

In a possible implementation, the first cause includes: Communication interference occurs in a process in which the first communication apparatus measures a first parameter based on the measurement signal.

In a possible implementation, the first cause is that the communication interference occurs in the process in which the first communication apparatus measures the first parameter based on the measurement signal.

In a possible implementation, that the communication interference occurs in the process in which the first communication apparatus measures the first parameter based on the measurement signal includes: The process in which the first communication apparatus measures the first parameter based on the measurement signal is interfered with by a first signal and/or a second signal. The first signal is to interfere with measurement of the first parameter, and the second signal is not to interfere with the measurement of the first parameter.

In a possible implementation, the measurement evaluation information indicates the reliability of the measurement result due to the first cause. The measurement evaluation information includes a first field and a second field. The first field indicates that the measurement result is available, and the second field indicates the reliability.

In a possible implementation, the first field is 0, 1, or a first binary sequence. The first binary sequence includes two or more bits. M bits in the second field are a binary representation of the reliability, where M is an integer greater than 0.

In a possible implementation, the measurement evaluation information indicates that the measurement result is unavailable due to the first cause, and the measurement evaluation information includes a first field. The first field indicates that the measurement result is unavailable, and the first field is 0, 1, or a second binary sequence, where the second binary sequence includes two or more bits.

In a possible implementation, the measurement evaluation information indicates that the measurement result is unavailable due to the first cause, and the measurement evaluation information includes a first field and a second field. The first field indicates that the measurement result is unavailable, and the first field is 0, 1, or a second binary sequence. The second binary sequence includes two or more bits, and a plurality of bits included in the second field are all 0.

In a possible implementation, the measurement evaluation information indicates the reliability of the measurement result due to the first cause, and the measurement evaluation information includes a figure of merit of the measurement result. An eighth bit of the figure of merit is 1, a first bit to a seventh bit of the figure of merit indicate the reliability, and the first bit to the seventh bit are not all 0.

In a possible implementation, the measurement evaluation information indicates that the measurement result is unavailable due to the first cause, and the measurement evaluation information includes a figure of merit of the measurement result. An eighth bit of the figure of merit is 1, and a first bit to a seventh bit of the figure of merit are all 0.

In a possible implementation, the measurement evaluation information is carried in MAC layer signaling. It may be understood that sending of the measurement evaluation information to the second communication apparatus by the first communication apparatus may be that the first communication apparatus sends, to the second communication apparatus, a MAC layer signal that includes the measurement evaluation information.

In a possible implementation, the measurement evaluation information is carried in an RMIIE.

In a possible implementation, the RMI IE includes a first indication, and the first indication indicates that the RMI IE includes the measurement evaluation information.

In a possible implementation, after the first communication apparatus receives the measurement signal from the second communication apparatus, the method further includes: The first communication apparatus performs an integrity check on the measurement signal to obtain an integrity check score. The integrity check score is positively correlated with integrity of the measurement signal. The first communication apparatus determines the reliability based on the integrity check score. The reliability is positively correlated with the integrity check score.

In a possible implementation, the measurement evaluation information indicates the reliability of the measurement result due to the first cause. The measurement evaluation information includes the first field and the second field. The first field indicates that the measurement result is available, and the second field indicates the reliability. A length of an STS sequence of the measurement signal is x, a value range of the integrity check score is an integer between 1 and x (including 1 and x), a value range of the reliability is an integer between 0 and (x-1), and a value range of the M bits in the second field is an integer between 0 and (x-1).

In a possible implementation, the measurement evaluation information includes the figure of merit of the measurement result. The eighth bit of the figure of merit is 1, and the first bit to the seventh bit of the figure of merit indicate the reliability. The length of the STS sequence of the ranging signal is x, a value range of the integrity check score is an integer between 1 and (x-1), and a value range of the reliability is an integer between 1 and (x-1). For example, x is 128.

In a possible implementation, the measurement signal is used to measure the first parameter between the first communication apparatus and the second communication apparatus. The measurement evaluation information is used by the second communication apparatus to adjust a process in which the first parameter is measured.

In a possible implementation, the measurement signal is a ranging signal, and the measurement signal is used to measure a distance between the first communication apparatus and the second communication apparatus.

In a possible implementation, the measurement signal is used to measure an AoA between the first communication apparatus and the second communication apparatus.

In a possible implementation, the measurement signal is used to measure the first parameter between the first communication apparatus and the second communication apparatus. The communication apparatus further includes: a processing unit, configured to adjust, based on the measurement evaluation information, the process in which the first parameter is measured, and perform processing to obtain a new measurement result.

In a possible implementation, the processing unit is specifically configured to discard, when the reliability is lower than a first threshold, the measurement result, and perform measurement to obtain a new measurement result.

In a possible implementation, the measurement signal is used to measure the first parameter between the first communication apparatus and the second communication apparatus. The communication apparatus further includes the processing unit, configured to terminate or suspend, after determining that reliability of each of a plurality of consecutive measurement results is lower than the first threshold, the process in which the first parameter is measured.

In a possible implementation, the reliability is obtained by the first communication apparatus based on an integrity check score of the measurement signal. The reliability is positively correlated with the integrity check score, and the integrity check score is positively correlated with integrity of the measurement signal.

For technical effects brought by the fourth aspect or the various possible implementations of the fourth aspect, refer to descriptions of technical effects of the second aspect or the various possible implementations of the second aspect.

According to a fifth aspect, this application provides a communication apparatus. The communication apparatus includes a processor. The processor may be configured to execute computer-executable instructions stored in a memory, so that the method shown in the first aspect or any possible implementation of the first aspect is performed, or the method shown in the second aspect or any possible implementation of the second aspect is performed.

In an embodiment of this application, in a process of performing the foregoing method, a process of sending information in the foregoing method may be understood as a process in which information is output based on instructions of the processor. When outputting the information, the processor outputs the information to a transceiver, so that the transceiver may perform transmission. After the information is output by the processor, other processing may be further needed, and then the information arrives at the transceiver. Similarly, during the processor receiving input information, the transceiver receives the information, and inputs the information into the processor. Further, after the transceiver receives the information, other processing may need to be performed on the information before the information is input into the processor.

Operations such as sending and/or receiving related to the processor may be generally understood as instructions output based on the processor, unless otherwise specified, or if the operations do not conflict with actual functions or internal logic of the operations in related descriptions.

In an implementation process, the processor may be a processor specially configured to perform these methods, or may be a processor that executes computer instructions in a memory to perform these methods, for example, a general-purpose processor. For example, the processor may be further configured to execute a program stored in the memory. When the program is executed, the data processing apparatus is enabled to perform the method shown in the first aspect or any possible implementation of the first aspect.

In a possible implementation, the memory is located outside the communication apparatus.

In a possible implementation, the memory is located inside the communication apparatus.

In this embodiment of this application, the processor and the memory may be further integrated into one device, in other words, the processor and the memory may be further integrated together.

In a possible implementation, the communication apparatus further includes a transceiver. The transceiver is configured to receive a packet, send a packet, and the like.

According to a sixth aspect, this application provides a communication apparatus. The communication apparatus includes a processing circuit and an interface circuit. The interface circuit is configured to obtain data or output data. The processing circuit is configured to perform the corresponding method shown in the first aspect or any possible implementation of the first aspect, or the processing circuit is configured to perform the corresponding method shown in the second aspect or any possible implementation of the second aspect.

According to a seventh aspect, this application provides a computer-readable storage medium. The computer-readable storage medium is configured to store a computer program. When the computer program is run on a computer, the method shown in the first aspect or any possible implementation of the first aspect is performed, or the method shown in the second aspect or any possible implementation of the second aspect is performed.

According to an eighth aspect, this application provides a computer program product. The computer program product includes a computer program or computer code. When the computer program product runs on a computer, the method shown in the first aspect or any possible implementation of the first aspect is performed, or the method shown in the second aspect or any possible implementation of the second aspect is performed.

According to a ninth aspect, this application provides a measurement system. The measurement system includes a first communication apparatus and a second communication apparatus. The first communication apparatus performs the method shown in the first aspect or any possible implementation of the first aspect. The second communication apparatus performs the method shown in the second aspect or any possible implementation of the second aspect.

## BRIEF DESCRIPTION OF DRAWINGS

To describe the technical solutions in embodiments of this application or in the background more clearly, the following briefly describes the accompanying drawings for describing embodiments of this application or the background.

FIG. 1 is a schematic diagram of a basic principle of ToF-based ranging;
FIG. 2 is an example of a FoM according to an embodiment of this application;
FIG. 3 is a schematic diagram of a measurement scenario according to this application;
FIG. 4 is a flowchart of a communication method according to an embodiment of this application;

FIG. 5A, FIG. 5B, FIG. 5C, and FIG. 5D are examples of fields indicating a TL of a measurement result according to an embodiment of this application;

FIG. 6 is a flowchart of another communication method according to an embodiment of this application;

FIG. 7 is a flowchart of another communication method according to an embodiment of this application;

FIG. 8 is a flowchart of another communication method according to an embodiment of this application;

FIG. 9 is a schematic structural diagram of a communication apparatus 900 according to an embodiment of this application;

FIG. 10 is a schematic structural diagram of another communication apparatus 100 according to an embodiment of this application; and

FIG. 11 is a schematic structural diagram of another communication apparatus 110 according to an embodiment of this application.

## DESCRIPTION OF EMBODIMENTS

In the specification, claims, and the accompanying drawings of this application, terms such as "first" and "second" are only intended to distinguish between different objects but do not describe a particular order. In addition, terms "include", "have", or any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Terms used in the following embodiments of this application are merely intended to describe specific embodiments, but are not intended to limit this application. As used in the specification of this application and the appended claims, the singular expression "a", "an", "the", "the foregoing", "such a", or "this" is intended to also include a plural expression unless otherwise clearly indicated in the context. It should also be understood that, the term "and/or" used in this application indicates and includes any or all possible combinations of one or more associated listed items. For example, "A and/or B" may represent three cases: Only A exists, only B exists, and both A and B exist, where A and B may be singular or plural. The term "a plurality of" used in this application means two or more.

As described in the background, currently, solutions of how to evaluate a measurement result needs to be studied, to avoid using an inaccurate measurement result. This application provides solutions in which a measurement result can be evaluated more completely and accurately. Reliability of a measurement result due to a first cause can be obtained according to communication solutions provided in this application. In other words, according to the communication solutions provided in this application, not only the reliability of the measurement result can be obtained, but also a cause for the unavailable measurement result can be learned of, so that a more reliable measurement result can be obtained by optimizing a measurement process. Further, this application further provides a method for exchange of measurement evaluation information, so that a corresponding communication apparatus can learn of the reliability of the measurement result, and adjust the measurement process based on the reliability of the measurement result, to finally form a more reliable measurement result. The measurement evaluation information may be referred to as a measurement quality evaluation result, a time measurement quality evaluation result, or other information. This is not limited in this application.

The following first describes some technical features in embodiments of this application.

Time of flight (Time of Flight, ToF)-based ranging:

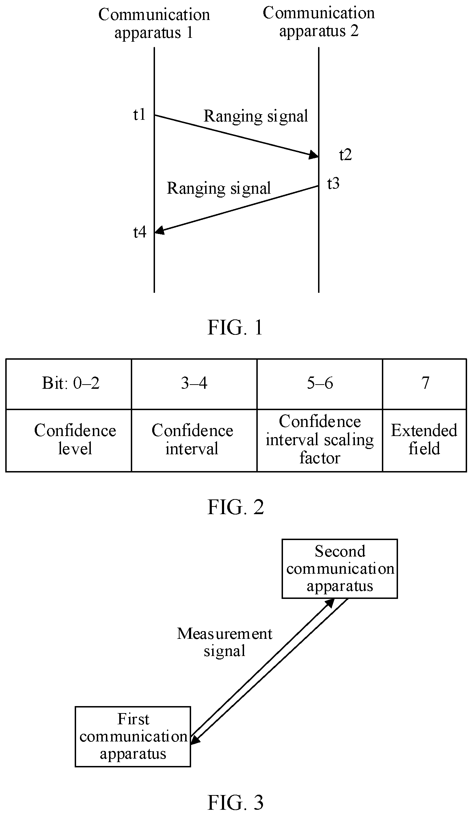

FIG. 1 is a schematic diagram of a basic principle of ToF-based ranging. As shown in FIG. 1, a communication apparatus 1 sends a ranging signal to a communication apparatus 2 at a moment 11. A moment t2 is a time at which the ranging signal sent by the communication apparatus 1 arrives at the communication apparatus 2. After processing the received ranging signal, the communication apparatus 2 sends the ranging signal to the communication apparatus 1 at a moment t3, and the ranging signal sent by the communication apparatus 2 arrives at the communication apparatus 1 at a moment t4. As shown in FIG. 1, a ToF-based ranging process is as follows: Two communication parties (that is, the communication apparatus 1 and the communication apparatus 2) calculate a distance between the two communication parties by measuring round-trip time of a message. A ranging sequence arrives at a receiving end (for example, the communication apparatus 1) through pulse shaping and modulation. The receiving end performs a related operation on the received ranging sequence (that is, the ranging signal) and a locally stored sequence, and obtains arrival time (t2 and t4) based on a correlation peak location. A formula for calculating a distance between the receiving end and a sending end (for example, the communication apparatus 2) is as follows:

$$d = \frac{t_{RTT}}{2}c, \ t_{RTT} = (t4 - t1) - (t3 - t2) \ (1)$$

c is the speed of light, and $t_{RTT}$ is the round-trip time of the message. The distance d between the two communication parties is obtained through the foregoing calculation.

t2 and t4 estimated by ranging devices (the communication apparatus 1 and the communication apparatus 2 in FIG. 1) are usually deviated and different from a real value. In addition, there are a plurality of attacks against a ranging process in reality, where a distance-reduction attack is a common attack. In the distance-reduction attack, an objective of an attacker is as follows: An interference signal is generated manually, so that signal arrival time estimated by a device that receives a ranging signal is earlier than actual time. Consequently, when an actual distance is very long, the distance between the two parties is mistaken as very short. It can be learned that if the ranging process is affected by the distance-reduction attack or other interference, it is very likely that an accurate ranging result cannot be obtained through measurement. In an application process such as intelligent sensing of a vehicle door lock and location-based contactless payment, if a ranging result is inaccurate, property loss may be caused.

IEEE 802.15.4:

IEEE 802.15.4 is a technical standard that defines a low-rate wireless personal area network (low-rate wireless personal area network, LR-WPAN) protocol. The technical standard specifies a physical layer and media access control for LR-WPANs and is maintained by the IEEE 802.15 working group. The IEEE 802.15.4 standard aims to provide a fundamental lower network layer of a wireless personal area network (wireless personal area network, WPAN) that focuses on low-cost and low-speed ubiquitous communication between devices. An IEEE 802.15.4 network, also referred to as an LR-WPAN network, is a set of devices that use a same wireless channel and communicate with each other in one POS according to the IEEE 802.15.4 standard. In this network, devices can be classified into a full function device (full function device, FFD) and a reduced function device (reduced function device, RFD) based on communication capabilities of the devices. The FFD devices can communicate with each other, and the FFD device and the RFD device can communicate with each other. The RFD devices cannot directly communicate with each other, and can only communicate with the FFD devices, or forward data externally through one FFD device. The FFD device associated with the RFD is referred to as a coordinator (coordinator) of the RFD.

Figure of merit (Figure of Merit, FoM):

A FoM is used to evaluate quality of a time measurement result. This is a manner applied in the IEEE 802.15.4z standard. FIG. 2 is an example of a FoM according to an embodiment of this application. As shown in FIG. 2, the FoM is an 8-bit field, where bits 0 to 2 represent a confidence level (confidence level). The three bits describe a probability that arrival time of a pulse waveform measured by a ranging device falls within a confidence interval. Bits 3 and 4 represent the confidence interval (confidence interval), and the two bits describe a range of a measurement error. Bits 5 and 6 are a confidence interval scaling factor (confidence interval scaling factor), and the two bits are introduced to describe more confidence interval probabilities. A bit 7 is an extension (extension) field. When the bit is 0, meanings of the bits 0 to 6 are as described above. When the bit is 1 and the bits 0 to 6 are all 0, it indicates that a measurement result is incorrect. When the bit is 1 and the bits 0 to 6 are not all 0, the meaning of the FoM is not defined. The FoM can indicate measurement on accuracy of the time measurement result. After completing time measurement, each ranging device generates a FoM, and a MAC layer reports the FoM to a local upper layer.

It is found that the FoM only performs rough measurement on accuracy of the measurement result, and cannot reflect a reason why a ranging result is unreliable or unavailable, and therefore cannot optimize a ranging process in a targeted manner. For example, the FoM cannot reflect whether the ranging process is attacked and a probability that the ranging process is attacked. This application provides solutions in which a measurement result can be evaluated more completely and accurately. According to the communication solutions provided in this application, not only reliability of a measurement result can be obtained, but also a cause for the unavailable measurement result can be learned of, so that a more reliable measurement result can be obtained by optimizing a measurement process in a targeted manner.

The following describes in detail a network architecture in this application.

The technical solutions provided in this application may be applied to various communication systems, for example, internet of things (internet of things, IoT), for example, an IEEE 802.15.4 network, an internet of vehicles, machine type communication (machine type communication, MTC), long term evolution-machine (long term evolution-machine, LTE-M), machine-to-machine (machine-to-machine, M2M) communication, vehicle-to-everything (vehicle-to-everything, V2X) communication, vehicle-to-vehicle (vehicle-to-vehicle, V2V) communication, long term evolution-vehicle (long term evolution-vehicle, LTE-V) interaction, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability microwave access (worldwide interoperability for microwave access, WiMAX) communication system, a 5th generation (5th generation, 5G) communication system or a new radio (new radio, NR) communication system, and another future communication system such as 6G. The following uses two communication apparatuses in the internet of things as an example to describe a measurement scenario used in the technical solutions provided in this application.

FIG. 3 is a schematic diagram of a measurement scenario according to this application. As shown in FIG. 3, the measurement scenario includes two or more communication apparatuses (FIG. 3 shows only two communication apparatuses, that is, a first communication apparatus and a second communication apparatus), and a measurement signal is transmitted between the first communication apparatus and the second communication apparatus. The first communication apparatus and the second communication apparatus measure a distance, an angle of arrival, and the like between the first communication apparatus and the second communication apparatus based on a wireless signal. For example, the first communication apparatus and the second communication apparatus measure the distance between the first communication apparatus and the second communication apparatus based on a ranging signal. It should be understood that the technical solutions provided in this application are applicable to any measurement scenario that has a measurement requirement (for example, ranging), and are applicable only to the internet of things.

The first communication apparatus and the second communication apparatus each may be a terminal device that has a wireless transceiver function. The terminal device may alternatively be referred to as user equipment. The terminal device may communicate with one or more core network (core network, CN) devices (or may be referred to as core devices, for example, gNBs) through an access network device (or may be referred to as an access device) in a radio access network (radio access network, RAN). Optionally, the terminal device may alternatively be referred to as an access terminal, a terminal, a subscriber unit, a subscriber station, a mobile station, a mobile station, a remote station, a remote terminal, a mobile device, a user terminal, a wireless network device, a user agent, a user apparatus, or the like. Optionally, the terminal device may be deployed on land, including indoor, outdoor, handheld, or in-vehicle, or may be deployed on a water surface (for example, a ship), or may be deployed in air (for example, an airplane, a balloon, or a satellite). Optionally, the terminal device may be a handheld device, an in-vehicle device, a wearable device, a terminal in the internet of things or in the internet of vehicles, a terminal in any forms in a 5G network or a future network, or the like that has a wireless communication function. This is not limited in this application.

One of the first communication apparatus and the second communication apparatus may be a terminal device, and the other may be an access network device. The access network device may be a device that can communicate with a terminal device. The access network device may be any one of the devices having a wireless transceiver function. The access network device may be a base station, an access point, or a transmission reception point (transmission reception point, TRP), or may be a device that communicates with a terminal device on an air interface in an access network by using one or more cells (cells), or the like. This is not limited in this application. For example, the base station may be an evolved NodeB (evolved NodeB, eNB or eNodeB) in LTE, a relay station or an access point, or a next generation base station (next generation NodeB, gNB) in a 5G network. It may be understood that the base station may alternatively be a base station in a future evolved public land mobile network (public land mobile network, PLMN), or the like. Optionally, the access network device may alternatively be an access node, a wireless relay node, a wireless backhaul node, or the like in a wireless local area network (wireless fidelity, Wi-Fi) system. Optionally, the access network device may alternatively be a radio controller in a cloud radio access network (cloud radio access network, CRAN) scenario.

The following describes the communication solutions provided in this application with reference to the accompanying drawings.

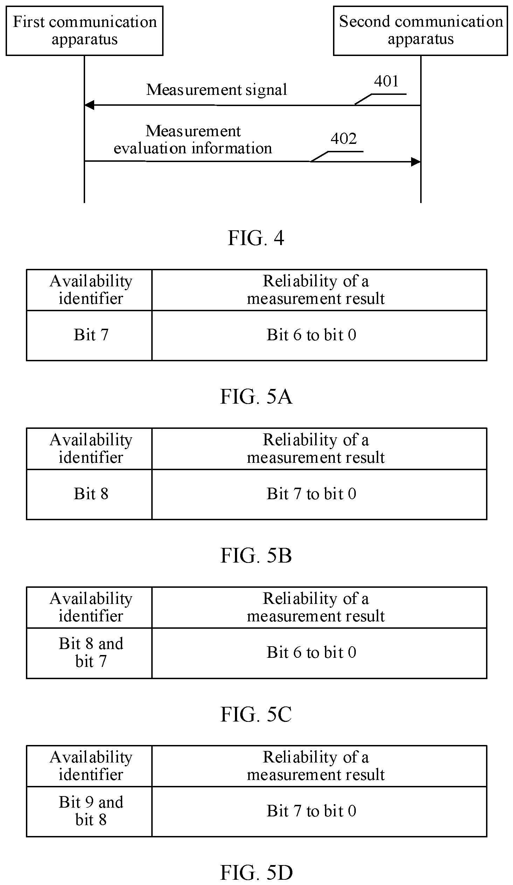

FIG. 4 is a flowchart of a communication method according to an embodiment of this application. As shown in FIG. 4, the method includes the following steps.

401: A first communication apparatus receives a measurement signal from a second communication apparatus.

The measurement signal is used to measure a first parameter between the first communication apparatus and the second communication apparatus. The first parameter may be a distance, an angle of arrival, or the like. This is not limited in this application. For example, the measurement signal is a ranging signal used to measure the distance between the first communication apparatus and the second communication apparatus.

In a possible implementation, the measurement signal is used to measure the first parameter between the first communication apparatus and the second communication apparatus. The measurement evaluation information is used by the second communication apparatus to adjust a process in which the first parameter is measured.

In a possible implementation, both the first communication apparatus and the second communication apparatus are wireless communication apparatuses. That the first communication apparatus receives the measurement signal from the second communication apparatus may be: The first communication apparatus receives the measurement signal from the second communication apparatus through a wireless channel. In other words, the measurement signal between the first communication apparatus and the second communication apparatus is transmitted in a wireless manner. Because the measurement signal is transmitted through the wireless channel, the measurement signal may be severely interfered.

402: The first communication apparatus sends measurement evaluation information to the second communication apparatus.

The measurement evaluation information indicates reliability of a measurement result due to a first cause. Alternatively, the measurement evaluation information indicates that the measurement result is unavailable due to the first cause. Alternatively, the measurement evaluation information indicates that the measurement result is available. The measurement result may be obtained by the first communication apparatus based on the measurement signal. For example, the measurement signal is a ranging signal, and the measurement result is a ranging result obtained through processing by the first communication apparatus based on the ranging signal. The reliability of the measurement result refers to a degree of trustworthiness of the measurement result or a probability that the measurement result is a real result (that is, an accurate measurement result).

In a possible implementation, the first cause includes: Communication interference occurs in a process in which the first communication apparatus measures the first parameter based on the measurement signal. Because the measurement signal is transmitted through the wireless channel, the measurement signal may suffer communication interference during transmission. That the communication interference occurs in the process in which the first communication apparatus measures the first parameter based on the measurement signal includes: The process in which the first communication apparatus measures the first parameter based on the measurement signal is interfered with by a first signal and/or a second signal. The first signal is to interfere with measurement of the first parameter, and the second signal is not to interfere with the measurement of the first parameter. The first signal may be an interference signal generated manually, and the first signal is to interfere with a measurement process of the first communication apparatus. For example, the measurement signal is the ranging signal, the first parameter is the distance between the first communication apparatus and the second communication apparatus, and the first signal is used to interfere with the ranging process of the first communication apparatus. The first signal may be considered as a malicious interference signal or an attack signal. The second signal may be a wireless signal that is sent by another communication apparatus and that is used to meet a service requirement of the another communication apparatus, and is not used to interfere with the measurement of the first parameter. For example, the second signal is a downlink signal sent by an access network device to a communication apparatus 3. For another example, the second signal is a data signal sent by the communication apparatus 3 to a communication apparatus 4. Optionally, the first cause is that the communication interference occurs in the process in which the first communication apparatus measures the first parameter based on the measurement signal.

In a possible implementation, before performing step 402, the first communication apparatus may perform the following operations: The first communication apparatus determines, based on the received measurement signal, the reliability of the measurement result due to the first cause or that the measurement result is unavailable due to the first cause; and then correspondingly generate the measurement evaluation information based on the determined reliability of the measurement result due to the first cause or that the measurement result is unavailable due to the first cause.

In a possible implementation, the measurement evaluation information is carried in MAC layer signaling. It may be understood that sending of the measurement evaluation information to the second communication apparatus by the first communication apparatus may be that the first communication apparatus sends, to the second communication apparatus, a MAC layer signal that includes the measurement evaluation information. In this implementation, the measurement evaluation information is carried in the MAC layer signaling, so that exchange of the measurement evaluation information can be implemented, to optimize a measurement process. Optionally, the measurement evaluation information is carried in an RMI IE. The measurement evaluation information is carried in the RMI IE, so that the RMI IE can provide more complete ranging-related information. Optionally, the measurement evaluation information is carried in a newly defined IE, and the measurement evaluation information may be carried in the newly defined IE and fed back to the second communication apparatus through a MAC layer.

In this embodiment of this application, the first communication apparatus sends the measurement evaluation information to the second communication apparatus, where the measurement evaluation information indicates the reliability of the measurement result due to the first cause or indicates that the measurement result is unavailable due to the first cause. In this way, the measurement result can be more completely evaluated, and the second communication apparatus can learn of a cause for the unavailable measurement result.

The foregoing does not describe in detail an implementation in which the measurement evaluation information indicates the reliability of the measurement result due to the first cause, and an implementation in which the measurement evaluation information indicates that the measurement result is unavailable due to the first cause. Therefore, the following describes the implementation in which the measurement evaluation information indicates the reliability of the measurement result due to the first cause, and the implementation in which the measurement evaluation information indicates that the measurement result is unavailable due to the first cause.

The implementation in which the measurement evaluation information indicates the reliability of the measurement result due to the first cause is as follows:

Implementation 1:

The measurement evaluation information includes a first field and a second field, where the first field indicates that the measurement result is available, and the second field indicates the reliability.

The first field may be 0, 1, or a first binary sequence. The first binary sequence includes two or more bits. M bits in the second field are a binary representation of the reliability, where M is an integer greater than 0. The first field may be considered as an availability identifier of the measurement result. The first binary sequence may be 11, 00, 10, 01, 111, or the like. This is not limited in this application. The first field and the second field may belong to a same field, or may be two different fields. In a possible implementation, the first field and the second field belong to the same field. The field represents a trustworthiness level (trustworthiness level, TL) of the measurement result, and the field may include a plurality of bits. For example, the field includes eight bits. The trustworthiness level of the measurement result may be referred to as the reliability of the measurement result. It may be understood that the field that indicates the TL of the measurement result is included in the measurement evaluation information, and the field includes the first field and the second field. FIG. 5A, FIG. 5B, FIG. 5C, and FIG. 5D are examples of fields indicating the TL of the measurement result according to this embodiment of this application. As shown in FIG. 5A, the field that indicates the TL of the measurement result includes a bit 0 to a bit 7. The bit 7 is a first field, and the bit 6 to the bit 0 are a second field. The bit 7 is an availability identifier. A value of the bit 7 indicates whether the measurement result is available or unavailable. The bit 6 to the bit 0 are a binary representation of the reliability of the measurement result. In seven bits from the bit 6 to the bit 0, there are 128 bit combinations in total, that is, 0000000 to 1111111, which can indicate a value range of 0 to 127. For example, if the bit 7 is 1, it indicates that the measurement result is available. If the bit 7 is 0, it indicates that the measurement result is unavailable. For another example, if the bit 7 is 0, it indicates that the measurement result is available. If the bit 7 is 1, it indicates that the measurement result is unavailable. As shown in FIG. 5B, the field that indicates the TL of the measurement result include a bit 0 to a bit 8. The bit 8 is a first field, and the bit 7 to the bit 0 are a second field. The bit 8 is an availability identifier. A value of the bit 8 indicates whether the measurement result is available or unavailable. The bit 7 to the bit 0 are a binary representation of the reliability of the measurement result. In eight bits from the bit 7 to the bit 0, there are 256 bit combinations in total, that is, 00000000 to 11111111, which can indicate a value range of 0 to 255. For example, the bit 7 to the bit 0 are 00001111, and the bit 7 to the bit 0 are a binary representation of 15. As shown in FIG. 5C, the field that indicates the TL of the measurement result includes a bit 0 to a bit 8. The bit 8 and the bit 7 are a first field, and the bit 6 to the bit 0 are a second field. The bit 8 and the bit 7 are an availability identifier. A value of the bit 8 and the bit 7 indicates whether the measurement result is available or unavailable. The bit 6 to the bit 0 are a binary representation of reliability of the measurement result. For example, the bit 8 and the bit 7 (the first field) are 11, and the bit 8 and the bit 7 indicate that the measurement result is available. For another example, the bit 8 and the bit 7 (the first field) are 00, and the bit 8 and the bit 7 indicate that the measurement result is unavailable. As shown in FIG. 5D, the field that indicates the TL of the measurement result includes a bit 0 to a bit 9. The bit 9 and the bit 8 are a first field, and the bit 7 to the bit 0 are a second field. The bit 9 and the bit 8 are an availability identifier. A value of the bit 9 and the bit 8 indicates whether the measurement result is available or unavailable. The bit 7 to the bit 0 are a binary representation of reliability of the measurement result. It should be understood that FIG. 5A, FIG. 5B, FIG. 5C, and FIG. 5D are examples of fields indicating the TL of the measurement result according to this embodiment of this application. The fields may be in another form. Formats of the first field and the second field, a quantity of bits included in the first field, and a quantity of bits included in the second field are not limited in this application.

Implementation 2:

The measurement evaluation information includes a figure of merit of the measurement result. An eighth bit of the figure of merit is 1, a first bit to a seventh bit of the figure of merit indicate the reliability, and the first bit to the seventh bit are not all 0. In this implementation, the measurement result is a ToF measurement result, and the measurement signal is the ranging signal.

FIG. 2 shows the figure of merit of the measurement result. The figure of merit includes a bit 0 to a bit 7. The first bit to the seventh bit of the figure of merit are the bit 0 to the bit 6, and the eighth bit of the figure of merit is the bit 7. It may be understood that when the bit 0 to the bit 6 of the figure of merit of the measurement result are not all 0 and the bit 7 is 1, the bit 0 to the bit 6 of the figure of merit indicate the reliability of the measurement result due to the first cause. The first communication apparatus indicates, by extending an existing FoM, the reliability of the measurement result due to the first cause. In other words, the first communication apparatus may extend an existing FoM to implement more complete evaluation on the measurement result. In the implementation 2, the measurement evaluation information includes the figure of merit of the measurement result. The eighth bit of the figure of merit is 1, and the first bit to the seventh bit of the figure of merit indicate the reliability. The measurement result can be evaluated more completely by extending the existing FoM without defining a new message or field.

Implementation 3:

The measurement evaluation information includes a third field. The third field indicates the reliability of the measurement result. K bits in the third field are not all 0, and K is an integer greater than 1.

The third field may include K bits, and the K bits in the third field are a binary representation of the reliability. For example, K is 7, 8, 9, or the like. In the implementation 3, when the bits in the third field are not all 0, each bit in the third field is a binary representation of the reliability; and when the bits in the third field are all 0, the third field indicates that the measurement result is unavailable. For example, the third field includes a bit 0 to a bit 6. In seven bits from the bit 0 to the bit 6, there are 128 bit combinations in total, that is, 0000000 to 1111111, which can indicate a value range of 0 to 127. When the bit 0 to the bit 6 (the third field) are 0000000, the third field indicates that the measurement result is unavailable. When the bit 0 to the bit 6 (the third field) are not 0000000, the bit 0 to the bit 6 are a binary representation of the reliability. For another example, the third field includes a bit 0 to a bit 7. In eight bits from the bit 0 to the bit 7, there are 256 bit combinations in total, that is, 00000000 to 11111111, which can indicate a value range of 0 to 255. When the bit 0 to the bit 7 (the third field) are 00000000, the third field indicates that the measurement result is unavailable. When the bit 0 to the bit 7 (the third field) are not 00000000, the bit 0 to the bit 7 are a binary representation of the reliability.

It should be understood that the implementation 1, the implementation 2, and the implementation 3 show only three possible implementations of the measurement evaluation information, and the measurement evaluation information may alternatively indicate, in another implementation, the reliability of the measurement result due to the first cause.

The implementation in which the measurement evaluation information indicates that the measurement result is unavailable due to the first cause is as follows:

Implementation 4:

The measurement evaluation information includes a first field. The first field indicates that the measurement result is unavailable, and the first field is 0, 1, or a second binary sequence, and the second binary sequence includes two or more bits.

The second binary sequence may be 11, 00, 10, 01, 111, or the like. This is not limited in this application. The first field may be considered as an availability identifier of the measurement result. For example, the first field is 0, and the first field indicates that the measurement result is unavailable due to the first cause. In this implementation, the first field may independently indicate whether the measurement result is available, and occupies few bits.

Implementation 5:

The measurement evaluation information includes a first field and a second field. The first field indicates that the measurement result is unavailable, and the first field is 0, 1, or a second binary sequence. The second binary sequence includes two or more bits, and a plurality of bits included in the second field are all 0.

The first field and the second field may belong to a same field, or may be two different fields. In a possible implementation, the first field and the second field belong to the same field, the field indicates a TL of the measurement result, and the field may include a plurality of bits. For example, the field includes eight bits. It may be understood that a field that indicates a TL of a measurement result is included in measurement evaluation information, and the field includes a first field and a second field. FIG. 5A, FIG. 5B, FIG. 5C, and FIG. 5D are examples of fields indicating the TL of the measurement result according to this embodiment of this application. Refer to FIG. 5A. The bit 7 is a first field, and the bit 0 to the bit 6 are a second field. For example, the bit 7 is 0, and the bit 0 to the bit 6 are 0000000. Refer to FIG. 5B. The bit 8 is a first field, and the bit 0 to the bit 7 are a second field. Refer to FIG. 5C. The bit 7 and the bit 8 are a first field, and the bit 0 to the bit 6 are a second field. For example, the bit 7 and bit 8 are 00, and the bit 0 to the bit 6 are 0000000. Refer to FIG. 5D. The bit 8 and the bit 9 are a first field, and the bit 0 to the bit 7 are a second field. For example, the bit 8 and the bit 9 are 00, and the bit 0 to the bit 6 are 00000000. In this implementation, the first field may be used to accurately indicate that the measurement result is unavailable, and few bits are occupied. The second field indicates that the reliability of the measurement result is the lowest value, and clearly indicates that the measurement result is unavailable due to the first cause.

Implementation 6:

The measurement evaluation information includes a figure of merit of the measurement result. An eighth bit of the figure of merit is 1, and a first bit to a seventh bit of the figure of merit are all 0. The first communication apparatus indicates, by using an existing FoM, that the measurement result is unavailable due to the first cause. In this implementation, the measurement evaluation information includes the figure of merit of the measurement result. The eighth bit of the figure of merit is 1, and the first bit to the seventh bit of the figure of merit are all 0, so that the existing FoM not only indicates that the measurement result is unavailable, but also indicates a cause for the unavailable measurement result.

Implementation 7:

The measurement evaluation information includes a third field. The third field indicates that the measurement result is unavailable. K bits in the third field are all 0, and K is an integer greater than 1.

It should be understood that the implementation 4, the implementation 5, the implementation 6, and the implementation 7 show only two possible implementations of the measurement evaluation information, and the measurement evaluation information may alternatively indicate, in another implementation, that the measurement result is unavailable.

During a practical application, the implementation in which the measurement evaluation information indicates the reliability of the measurement result due to the first cause may be combined with the implementation in which the measurement evaluation information indicates that the measurement result is unavailable. In this way, the measurement evaluation information can not only indicate the reliability, but also indicate that the measurement result is unavailable. For example, the implementation 1 may be combined with the implementation 4 or implementation 5. For example, the measurement evaluation information includes a first field and a second field. The first field indicates whether the measurement result is available or unavailable. When the first field indicates that the measurement result is available, the second field indicates the reliability. When the first field indicates that the measurement result is unavailable, a plurality of bits included in the second field are all 0 or the second field is not limited. For another example, the implementation 2 is combined with the implementation 6. For example, the measurement evaluation information includes a figure of merit of the measurement result. When an eighth bit of the figure of merit is 1, and a first bit to a seventh bit are not all 0, the first bit to the seventh bit of the figure of merit indicate the reliability. When the eighth bit of the figure of merit is 1, and the first bit to the seventh bit are all 0, the measurement evaluation information indicates that the measurement result is unavailable. For example, the implementation 3 is combined with the implementation 7. For example, the measurement evaluation information includes a third field. When K bits in the third field are not all 0, the K bits in the third field are a binary representation of the reliability. When the K bits in the third field are all 0, the measurement evaluation information indicates that the measurement result is unavailable. It should be understood that the measurement evaluation information may indicate that the measurement result is unavailable, and may also indicate the reliability of the measurement result.

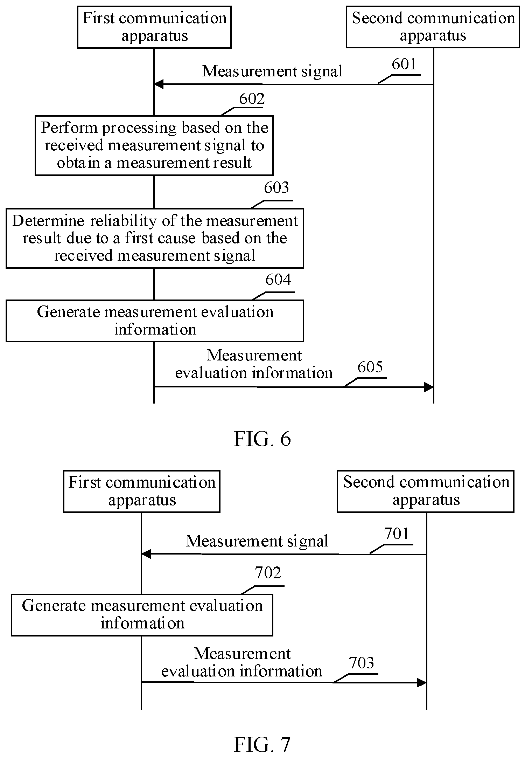

FIG. 6 is a flowchart of another communication method according to an embodiment of this application. As shown in FIG. 6, the method includes the following steps.

601: A first communication apparatus receives a measurement signal from a second communication apparatus.

For step 601, refer to step 401.

602: The first communication apparatus performs processing based on the received measurement signal to obtain a measurement result.

In a possible implementation, the measurement signal is a ranging signal, and the measurement result is a ranging result. Step 602 may be: The first communication apparatus performs processing based on the received ranging signal to obtain the ranging result. Because performing processing based on the measurement signal to obtain the measurement result is a common technical means in this field, details are not described herein again. Step 602 is optional rather than mandatory.

603: The first communication apparatus determines, based on the received measurement signal, reliability of the measurement result due to a first cause.

Step 603 may be replaced as: The first communication apparatus determines, based on the received measurement signal, that the measurement result is unavailable due to a first cause.

A possible implementation of step 603 is as follows: The first communication apparatus performs an integrity check on the measurement signal to obtain an integrity check score. The integrity check score is positively correlated with integrity of the measurement signal. The first communication apparatus determines the reliability based on the integrity check score, where the reliability is positively correlated with the integrity check score. The measurement signal is a ranging signal. A length of an STS sequence of the measurement signal is x. The integrity check score of the measurement signal is represented by z, and z may be an integer between -x and x. Both x and z are integers. For example, x is 128. That the first communication apparatus determines the reliability based on the integrity check score may be: The reliability is determined when the integrity check score is greater than or equal to a second threshold. For example, x is 128, a value range of z is -128 to 128, and the second threshold is 1. When the integrity check score is less than the second threshold, the first communication apparatus determines that the measurement result is unavailable. An implementation in which the first communication apparatus performs the integrity check on the measurement signal and an implementation in which the reliability is determined based on the integrity check score are subsequently described in detail.

604: The first communication apparatus generates measurement evaluation information.

The measurement evaluation information indicates the reliability of the measurement result due to the first cause. Any one of the implementation 1, the implementation 2, and the implementation 3 may be used for the measurement evaluation information.

A possible implementation of step 604 is as follows: Measurement evaluation information is correspondingly generated based on the determined reliability of the measurement result due to the first cause.

605. The first communication apparatus sends the measurement evaluation information to the second communication apparatus.

For step 605, refer to step 402. The first communication apparatus may further send the measurement result to the second communication apparatus. The first communication apparatus may send the measurement evaluation information and the measurement result to the second communication apparatus via one message, or may send the measurement evaluation information and the measurement result via different messages.

In this embodiment of this application, the first communication apparatus determines, based on the received measurement signal, the reliability of the measurement result due to the first cause. Because the measurement result is obtained by processing the measurement signal, the reliability of the measurement result due to the first cause may be accurately determined based on the received measurement information. The first communication apparatus sends the measurement evaluation information to the second communication apparatus, where the measurement evaluation information indicates the reliability of the measurement result due to the first cause or indicates that the measurement result is unavailable due to the first cause. In this way, the measurement result can be more completely evaluated, and the second communication apparatus can learn of a cause for the unavailable measurement result.

There are a plurality of implementations in which the first communication apparatus performs the integrity check on the measurement signal. A possible implementation is as follows: The first communication apparatus completes channel estimation by using a pilot included in the measurement signal (for example, the ranging signal) sent by the second communication apparatus, and then performs channel equalization to obtain an equalized received signal. Next, the first communication apparatus samples a signal segment that includes an STS sequence and that is in the equalized received signal, and a total quantity of samples is equal to a total length of the STS sequence (for example, if the length of the STS sequence is 128, the total quantity of samples is also 128). After obtaining a sample sequence through sampling, the first communication apparatus generates a check sequence based on a polarity of each sample in the sample sequence. If the polarity is positive, the corresponding check sequence sample is 1; otherwise, the corresponding check sequence sample is -1. The first communication apparatus performs a correlation operation on the check sequence and the locally stored STS sequence X[k]. The check sequence is denoted as Y[k], and the foregoing correlation operation process is represented as:

$$z = \sum_{k=1}^{N} X[k]Y[k] \quad (1)$$

N represents a length of the check sequence Y[k], and z represents the integrity check score.

It can be learned from the formula (1) that z is an integer between -x and x (where x herein represents a length of an STS sequence used for ranging, and for example, in IEEE 802.15.4z, a length of each segment of the STS sequence is 128, and therefore x is 128; and considering that lengths of STS sequences in practice are all powers of 2, x may be represented as $x = 2^m$, where m is a positive integer). A value of z reflects a similarity between the check sequence and the locally stored STS sequence. For example, if z=x, it indicates that each symbol of the check sequence is completely consistent with each symbol of the locally stored STS sequence. This indicates that the sent measurement signal is not interfered. If z=-x, it indicates that each symbol of the check sequence is inconsistent with each symbol of the locally stored STS sequence. This indicates that the sent ranging signal is severely interfered. If z=0, it indicates that symbols of the check sequence are inconsistent with half symbols of the locally stored STS sequence. This indicates that some interference exists in a measurement process. For another value of z, it can be learned from the foregoing analysis that a smaller value of z indicates a higher probability that the measurement process is interfered. Whether a measurement process is attacked is used as an example. If z=x, it indicates that each symbol of the check sequence is completely consistent with each symbol of the locally stored STS sequence. This indicates that a sent ranging signal is not attacked. If z=-x, it indicates that each symbol of the check sequence is inconsistent with each symbol of the locally stored STS sequence. This indicates that the sent ranging signal is attacked. If z=0, it indicates that symbols of the check sequence are inconsistent with half symbols of the locally stored STS sequence. This indicates that a probability that the ranging process is attacked exists. For another value of z, it can be learned from the foregoing analysis that a smaller value of z indicates a higher probability of being attacked in the ranging process.

Several possible manners in which the first communication apparatus determines the reliability of the measurement result based on the integrity check score are as follows:

Manner 1:

If the integrity check score meets $-x \leq z \leq 0$, the first communication apparatus determines that the measurement result is unavailable; or if the integrity check score meets $1 \leq z \leq x$, a formula for determining the reliability of the measurement result by the first communication apparatus based on the integrity check score is as follows:

$$t = \text{round}\left(\frac{z-1}{\Delta}\right) \quad (2)$$

t represents the reliability of the measurement result, z represents the integrity check score of the measurement signal, round() represents a rounding-off operation, t is an integer, and $\Delta = \frac{x-1}{2^7-1}$. A value of $\Delta$ can be set as required, for example, $\Delta = \frac{x-1}{2^6-1}$ or $\Delta = \frac{x-1}{2^8-1}$. To reflect the reliability of the measurement result, the first communication apparatus may map a value range from 1 to x of z to 0 to 127 according to the formula (2), and represent a mapping result of z in binary, to obtain a bit 0 to a bit 6.

If the integrity check score meets $-x \leq z \leq 0$, it indicates that severe communication interference occurs in a process in which the first communication apparatus measures a first parameter based on the measurement signal, or there is a high probability that communication interference occurs, and the measurement result obtained through processing based on the measurement signal is unavailable. If the integrity check score meets $1 \leq z \leq x$, it indicates that less communication interference occurs in a process in which the first communication apparatus measures a first parameter based on the measurement signal, or there is a low probability that the communication interference occurs, and the measurement result is available. Whether the measurement process is attacked is used as an example. If $-x \leq z \leq 0$, it indicates a high probability that the measurement process is attacked, and the measurement result is unavailable. If the integrity check score meets $1 \leq z \leq x$, it indicates a low probability that the measurement process is attacked, and the measurement result is available.

In a possible implementation, the measurement evaluation information includes a first field and a second field. The first field indicates that the measurement result is available, and the second field indicates the reliability of the measurement result; or the first field indicates that the measurement result is unavailable. In Manner 1, if $1 \leq z \leq x$, the first field indicates that the measurement result is available, and the second field indicates the reliability of the measurement result. For example, M bits in the second field are a binary representation of the reliability of the measurement result. For example, the measurement evaluation information includes a bit 0 to a bit 7, the first field is the bit 7, and the second field is the bit 0 to the bit 6. If $1 \leq z \leq x$, and the bit 7 is 1, it indicates that the measurement result is available, and the bit 0 to the bit 6 are a binary representation of the reliability. In Manner 1, if $-x \leq z \leq 0$, the first field indicates that the measurement result is unavailable, the reliability (or a trustworthiness level) of the measurement result does not need to be described in detail. For another example, the measurement evaluation information includes a bit 0 to a bit 7, the first field is the bit 7, and the second field is the bit 0 to the bit 6. If the bit 7 is 0, it indicates that the measurement result is unavailable, and the bit 0 to the bit 6 may be all set to be 0, to indicate that when the integrity check score meets $-x \leq z \leq 0$, the trustworthiness level is the lowest level. In this implementation, the first field indicates whether the measurement result is available or unavailable. Therefore, the first field may be considered as an availability identifier.

Manner 2:

If the integrity check score meets $-x \leq z \leq 0$, the first communication apparatus determines that the measurement result is unavailable; or if the integrity check score meets $1 \leq z \leq x$, the first communication apparatus first maps each integer in a range from 1 to x to a number in a range from $e^1$ to $e^x$ based on a non-linear mapping relationship $a = e^b$. If a mapping result of z is denoted as $z_1$, $z_1 = e^z$. Then, zi is substituted into the formula (2), and a result is represented in binary, to obtain bit 0 to bit 6.

In a possible implementation, the measurement evaluation information includes a first field and a second field. The first field indicates that the measurement result is available, and the second field indicates the reliability of the measurement result; or the first field indicates that the measurement result is unavailable. In Manner 2, if $-x \leq z \leq 0$, the first field indicates that the measurement result is unavailable; or if $1 \leq z \leq x$, the first field indicates that the measurement result is available, and the second field indicates the reliability of the measurement result. For example, M bits in the second field are a binary representation of the reliability of the measurement result. For example, the measurement evaluation information includes a bit 0 to a bit 7, the first field is the bit 7, and the second field is the bit 0 to the bit 6. If $1 \leq z \leq x$, and the bit 7 is 1, it indicates that the measurement result is available, and the bit 0 to the bit 6 are a binary representation of the reliability. In Manner 2, if $-x \leq z \leq 0$, the first field indicates that the measurement result is unavailable, the reliability (or a trustworthiness level) of the measurement result does not need to be described in detail. For example, the measurement evaluation information includes a bit 0 to a bit 7, the first field is the bit 7, and the second field is the bit 0 to the bit 6. If $-x \leq z \leq 0$, and the bit 7 is 0, it indicates that the measurement result is unavailable, and the bit 0 to the bit 6 may be all set to be 0, to indicate that when the integrity check score meets $-x \le z \le 0$, the trustworthiness level is the lowest level. In this implementation, the first field indicates whether the measurement result is available or unavailable. Therefore, the first field may be considered as an availability identifier.

Manner 3:

If the integrity check score meets that z is equal to x, the first communication apparatus determines that the measurement result is available; if the integrity check score meets that $-x \le z \le 0$, the first communication apparatus determines that the measurement result is unavailable; or if the integrity check score meets $1 \le z \le x-1$, a formula for determining the reliability of the measurement result by the first communication apparatus based on the integrity check score is as follows:

$$t = \mathrm{round}\left(\frac{z-1}{\Delta}\right)+1 \ (3)$$

t represents the reliability of the measurement result, z represents the integrity check score of the measurement signal, round() represents a rounding-off operation, t is an integer, and $\Delta = \frac{x-2}{2^7-2}$. A value of $\Delta$ can be set as required, for example, $\Delta = \frac{x-2}{2^6-2}$ or $\Delta = \frac{x-2}{2^8-2}$. To reflect the reliability of the measurement result, the first communication apparatus may map a value range from 1 to (x-1) of z to 1 to 127 according to the formula (3), and represent a mapping result of z in binary, to obtain a bit 0 to a bit 6.

In a possible implementation, the measurement evaluation information includes a figure of merit of the measurement result. If the integrity check score z is equal to x, it indicates that the communication interference does not occur in a measurement process (for example, the measurement process is not attacked). In this case, an extension field (that is, a bit 7) of a FoM is 0, and a definition of remaining fields (that is, a bit 0 to a bit 6) is the same as a current definition. In this case, the first communication apparatus does not need to evaluate the reliability of the measurement result, and only needs to evaluate measurement precision according to an existing definition manner. If the integrity check score meets $-x \le z \le 0$, in other words, the integrity check score is low, it indicates that the communication interference occurs in a ranging process (for example, an attack exists). In this case, an extension field (that is, a bit 7) of a FoM is 1, and remaining fields (that is, a bit 0 to a bit 6) are all 0, indicating that the measurement result is unreliable. If the integrity check score meets $1 \le z \le x - 1$, it indicates that there is a probability that the communication interference occurs (for example, a probability of being attacked) in the ranging process, and a lower score indicates a higher probability that the communication interference occurs. In seven bits from the bit 0 to the bit 6, there are 128 bit combinations in total. A bit combination of all zeros is used. Therefore, there are 127 bit combinations available, that is, 0000001 to 1111111, which can indicate a value range of 1 to 127. To reflect a trustworthiness level, the first communication apparatus may map a value range of z from 1 to x-1 to 1 to 127, and represent a mapping result of z in binary, to obtain the bit 0 to the bit 6 in the FoM.

The following describes two examples of generating the measurement evaluation information based on the measurement signal.

Example 1: The measurement evaluation information is an extended FoM. In other words, the measurement evaluation information may be considered as an extension of the existing FoM. In other words, the FoM is newly defined, so that the FoM may be used as the measurement evaluation information. In Example 1, the measurement signal is a ranging signal, and the measurement evaluation information is generated based on a case whether an attack exists in a ranging process.

(1) The first communication apparatus performs the integrity check on the measurement signal to obtain the integrity check score.
Because a complete process of obtaining the integrity check score through calculation according to the formula (1) has been described above, details are not described herein again.
(2) The first communication apparatus generates the measurement evaluation information based on the integrity check score.

The integrity check score is represented by z, where z is an integer between -x and x (where x indicates a length of an STS sequence used for ranging). IEEE 802.15.4z is used as an example. A length of each segment of the STS sequence is 128, and therefore x is 128.

(a) If the integrity check score z is equal to x, it indicates that the ranging process is not attacked. In this case, an extension field (that is, a bit 7) of the FoM is 0, and a definition of remaining fields (that is, a bit 0 to a bit 6) is the same as a definition in a conventional technology. In this case, the FoM does not need to evaluate an attack probability (in other words, the reliability of the measurement result does not need to be determined), and only needs to evaluate measurement precision.

(b) If the integrity check score meets $-x \leq z \leq 0$, in other words, the integrity check score is low, it indicates that an attack exists in the ranging process. In this case, an extension field (that is, a bit 7) of the FoM is 1, and remaining fields (that is, a bit 0 to a bit 6) are all 0, indicating that the measurement result is unreliable or unavailable.

(c) If the integrity check score meets $1 \leq z \leq x - 1$, it indicates that there is a probability that the ranging process is attacked, and a lower score indicates a higher probability of being attacked. In this case, an extension field (that is, a bit 7) of the FoM is defined as 1, and remaining fields (that is, a bit 0 to a bit 6) indicates a probability of being attacked. In seven bits from the bit 0 to the bit 6, there are 128 bit combinations in total. A bit combination of all zeros is used in (b). Therefore, there are 127 bit combinations available, that is, 0000001 to 1111111, which can indicate a value range of 1 to 127. To reflect the trustworthiness level, a value range of z from 1 to x-1 is mapped to 1 to 127, and a mapping result of z is represented in binary to obtain the bit 0 to the bit 6 in the FoM. The first communication apparatus may map the value range from 1 to (x-1) of z to 1 to 127 by using the formula (3).

Example 2: The measurement evaluation information includes eight bits in total, that is, a bit 0 to a bit 7. Refer to FIG. 5A. The bit 7 is an availability identifier. The bit 0 to the bit 7 indicate the reliability of the measurement result. In Example 2, the measurement signal is a ranging signal, and the measurement evaluation information is generated based on whether an attack exists in a ranging process.

(1) The first communication apparatus performs the integrity check on the measurement signal to obtain the integrity check score.
Because a complete process of obtaining the integrity check score through calculation according to the formula (1) has been described above, details are not described herein again.
(2) The first communication apparatus generates the measurement evaluation information based on the integrity check score.

The integrity check score is represented by z, where z is an integer between -x and x (where x indicates a length of an STS sequence used for ranging). IEEE 802.15.4z is used as an example. A length of each segment of the STS sequence is 128, and therefore x is 128.

A manner in which the first communication apparatus generates the measurement evaluation information based on the integrity check score is as follows:

Definition of the bit 7: If the integrity check score meets $-x \leq z \leq 0$, the availability identifier bit 7 is 0, indicating that there is a high probability that the ranging process is attacked and the measurement result is unavailable. If the integrity check score is x, the availability identifier bit 7 is 1, indicating that there is a low probability that the ranging process is attacked and the measurement result is available.

Definition of the bit 6 to the bit 0: If bit 7 is 0, the measurement result is unavailable based on the foregoing descriptions, and therefore the trustworthiness level does not need to be described in detail. The bit 6 to the bit 0 are all set to be 0, indicating that the trustworthiness level is the lowest level when the integrity check score meets $-x \leq z \leq 0$. If the bit 7 is 1 (that is, $1 \leq z \leq x$), it indicates that a probability that the ranging process is attacked exists, and a lower score indicates a higher probability. In this case, the bit 0 to the bit 6 of the measurement evaluation information is defined to indicate the reliability of the measurement result. In seven bits from the bit 0 to the bit 6, there are 128 bit combinations in total, that is, 0000000 to 1111111, which can indicate a value range of 0 to 127. To reflect the reliability, a value range of z from 1 to x is mapped to 0 to 127, and a mapping result of z is represented in binary to obtain the bit 0 to the bit 6. The first communication apparatus may map the value range from 1 to x of z to 0 to 127 by using the formula (2).

FIG. 7 is a flowchart of another communication method according to an embodiment of this application. As shown in FIG. 7, the method includes the following steps.

701: A first communication apparatus receives a measurement signal from a second communication apparatus.

For step 701, refer to step 401.

702: The first communication apparatus generates measurement evaluation information.

For step 702, refer to step 604.

703: The first communication apparatus sends the measurement evaluation information to the second communication apparatus.

In a possible implementation, the measurement evaluation information is carried in MAC layer signaling. Optionally, the measurement evaluation information is carried in an RMI IE. The RMI IE may include a first indication, where the first indication indicates that the RMI IE includes or does not include the measurement evaluation information. The first indication may be an extended bit in the RMI IE in an IEEE 802.15.4z standard. For example, the first indication being 1 indicates that the RMI IE includes the measurement evaluation information; or the first indication being 0 indicates that the RMI IE does not include the measurement evaluation information. The following describes two possible examples in which the measurement evaluation information is carried in the RMI IE:

Example 1: A bit is extended in the RMI IE in the IEEE 802.15.4z standard, and is defined as TL Present. If the bit is 1, an RMI List includes the measurement evaluation information; or if the bit is 0, the RMI List does not include the measurement evaluation information. The bit extended in the RMI IE can alternatively be defined as another name. Before a measurement process starts, two measurement parties (that is, the first communication apparatus and the second communication apparatus) determine, through negotiation in advance, whether to exchange the measurement evaluation information after measurement is completed. If the measurement evaluation information needs to be exchanged, the measurement evaluation information is included in the RMI IE, and is fed back by the first communication apparatus to the second communication apparatus after the measurement is completed. The fields indicating the TL of the measurement result in FIG. 5A to FIG. 5C may be examples of the measurement evaluation information. In Example 1, any one of the foregoing implementation 1 (corresponding to the TL), implementation 3, implementation 4, and implementation 5 may be used for the measurement evaluation information.

Example 2: A bit is extended in the RMI IE in the IEEE 802.15.4z standard, and is defined as ToF FoM Present. If the bit is 1, the RMI List includes the extended FoM. If the bit is 0, the RMI List does not include the extended FoM. The extended FoM is the measurement evaluation information in the implementation 2 or the implementation 6. It should be understood that if the implementation of the measurement evaluation information is the implementation 2 or the implementation 6, the measurement evaluation information is the extended FoM. Before a measurement process starts, two measurement parties determine, through negotiation in advance, whether to exchange ToF FoM after measurement is completed, and whether to exchange measurement precision information or trustworthiness level information of a measurement result. If the measurement precision information needs to be exchanged, the ToF FoM is included in the RMI IE, and an extended bit is 0, and the ToF FoM is fed back by the first communication apparatus to the second communication apparatus after the measurement is completed. If the trustworthiness level information (that is, reliability) of the measurement result needs to be exchanged, the ToF FoM is included in the RMI IE and an extended bit is 1, and the ToF FoM is fed back by the first communication apparatus to the second communication apparatus after the measurement is completed.

Example 3: The measurement evaluation information is carried in a newly defined TL IE. After completing measurement, the first communication apparatus feeds back the TL IE to the second communication apparatus through a MAC layer. The TL IE is a newly defined MAC layer signaling. In other words, the measurement evaluation information may be carried in a newly defined IE. An example of a format of the newly defined IE is shown in FIG. 5A to FIG. 5D.

The method procedures in FIG. 4, FIG. 6, and FIG. 7 describe the communication solutions provided in this application from the perspective of the first communication apparatus. The following describes, from the perspective of the second communication apparatus, the communication solutions provided in this application.

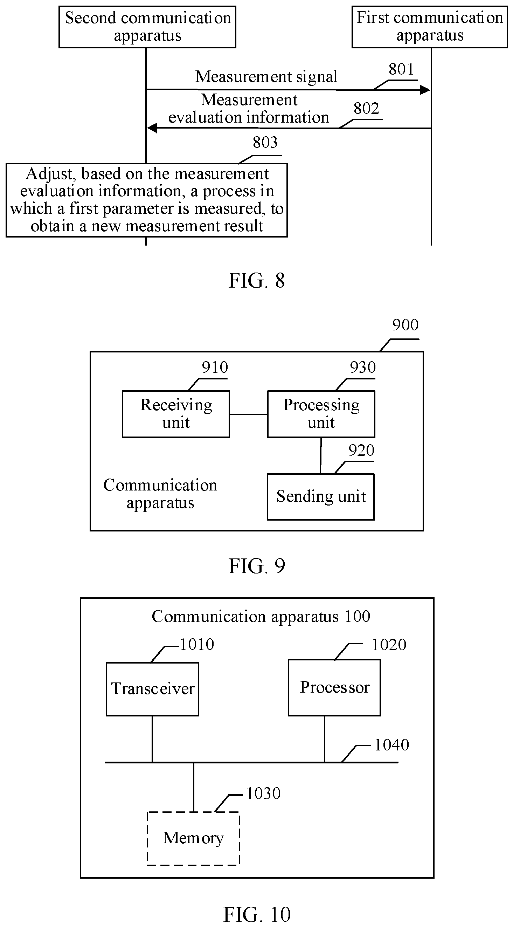

FIG. 8 is a flowchart of another communication method according to an embodiment of this application. As shown in FIG. 8, the method includes the following steps.

801: A second communication apparatus sends a measurement signal to a first communication apparatus.

For step 801, refer to step 401.

802: The second communication apparatus receives measurement evaluation information from the first communication apparatus.

The measurement evaluation information indicates reliability of a measurement result due to a first cause, or the measurement evaluation information indicates that the measurement result is unavailable due to the first cause. The measurement result is obtained based on the measurement signal.

For step 802, refer to step 402.

803: The second communication apparatus adjusts, based on the measurement evaluation information, a process in which a first parameter is measured, to obtain a new measurement result.

A possible implementation of step 803 is as follows: When the reliability is lower than a first threshold, the second communication apparatus discards the measurement result, and performs measurement to obtain the new measurement result. The first threshold mainly depends on a value range of the reliability. For example, the value range of the reliability is from 0 to 127, and the first threshold may be 50, 60, 80, or the like. This is not limited in this application. In this implementation, when the reliability of the measurement result is lower than the first threshold, the second communication apparatus discards the measurement result, and performs measurement to obtain the new measurement result. This can avoid performing an incorrect operation based on the unreliable or unavailable measurement result.

In a possible implementation, the measurement signal is used to measure the first parameter between the first communication apparatus and the second communication apparatus. The method further includes: When determining that reliability of each of a plurality of consecutive measurement results is lower than the first threshold, the second communication apparatus terminates or suspends the process in which the first parameter is measured. The plurality of measurement results are all obtained by measuring the first parameter between the first communication apparatus and the second communication apparatus.

In this implementation, after determining that the reliability of each of the plurality of consecutive measurement results is lower than the first threshold, the second communication apparatus terminates or suspends the process in which the first parameter is measured. This can reduce a power waste.

In this embodiment of this application, the second communication apparatus receives the measurement evaluation information from the first communication apparatus, where the measurement evaluation information indicates the reliability of the measurement result due to the first cause or indicates that the measurement result is unavailable due to the first cause. In this way, the measurement result can be more completely evaluated, and the second communication apparatus can learn of a cause for the unavailable measurement result. The second communication apparatus adjusts, based on the measurement evaluation information, the process in which the first parameter is measured, to obtain a more reliable measurement result.

FIG. 9 is a schematic structural diagram of a communication apparatus 900 according to an embodiment of this application. The communication apparatus 900 may correspondingly implement functions or steps implemented by the communication apparatuses (for example, the first communication apparatus and the second communication apparatus) in the foregoing method embodiments. The communication apparatus 900 may include a receiving unit 910, a sending unit 920, and a processing unit 930. Optionally, the communication apparatus may further include a storage unit. The storage unit may be configured to store instructions (code or a program) and/or data. The receiving unit 910, the sending unit 920, and the processing unit 930 may be coupled to the storage unit. For example, the processing unit 930 may read the instructions (the code or the program) and/or the data in the storage unit, to implement a corresponding method. The foregoing units may be independently disposed, or may be partially or completely integrated. For example, the receiving unit 910 and the sending unit 920 are integrated in a transceiver unit. For example, an entity corresponding to the receiving unit 910 and the sending unit 920 is a transceiver.

In some possible implementations, the communication apparatus 900 can correspondingly implement behavior and functions of the first communication apparatus in the foregoing method embodiments. For example, the communication apparatus 900 may be a first communication apparatus, or may be a component (for example, a chip or a circuit) used in a first communication apparatus. The receiving unit 910 may be configured to perform, for example, all receiving operations performed by the first communication apparatus in embodiments shown in FIG. 4, FIG. 6, and FIG. 7, for example, step 401 in the embodiment shown in FIG. 4, step 601 in the embodiment shown in FIG. 6, step 701 in the embodiment shown in FIG. 7, and/or another process used to support the technology described in this specification. The sending unit 920 may be configured to perform, for example, all sending operations performed by the first communication apparatus in embodiments shown in FIG. 4, FIG. 6, and FIG. 7, for example, step 402 in the embodiment shown in FIG. 4, step 605 in the embodiment shown in FIG. 6, step 703 in the embodiment shown in FIG. 7, and/or another process used to support the technology described in this specification. The processing unit 930 is configured to perform all operations except the sending and receiving operations performed by the first communication apparatus in embodiments shown in FIG. 4, FIG. 6, and FIG. 7, for example, step 602, step 603, and step 604 in the embodiment shown in FIG. 6, and step 702 in the embodiment shown in FIG. 7.

In some possible implementations, the communication apparatus 900 can correspondingly implement behavior and functions of the second communication apparatus in the foregoing method embodiments. For example, the communication apparatus 900 may be a second communication apparatus, or may be a component (for example, a chip or a circuit) used in a second communication apparatus. The receiving unit 910 may be configured to perform, for example, all receiving operations performed by the second communication apparatus in the embodiment shown in FIG. 8, for example, step 802 in the embodiment shown in FIG. 8, and/or another process used to support the technology described in this specification. The sending unit 920 may be configured to perform, for example, all sending operations performed by the second communication apparatus in the embodiment shown in FIG. 8, for example, step 801 in the embodiment shown in FIG. 8, and/or another process used to support the technology described in this specification. The processing unit 930 is configured to perform all operations except the receiving and sending operations performed by the second communication apparatus in the embodiment shown in FIG. 8, for example, step 803 in the embodiment shown in FIG. 8.

It should be understood that the first communication apparatus and the second communication apparatus are two measurement parties, and both the first communication apparatus and the second communication apparatus can implement behavior and functions of each other.

FIG. 10 is a schematic structural diagram of another communication apparatus 100 according to an embodiment of this application. The communication apparatus in FIG. 10 may be the first communication apparatus. The communication apparatus in FIG. 10 may be the second communication apparatus.

As shown in FIG. 10, the communication apparatus 100 includes at least one processor 1020 and one transceiver 1010.

In some other embodiments of this application, the processor 1020 and the transceiver 1010 may be configured to perform a function, an operation, or the like performed by the first communication apparatus. The processor 1020 may perform, for example, one or more of the following operations: step 602, step 603, and step 604 in the embodiment shown in FIG. 6, and step 702 in the embodiment shown in FIG. 7. For example, the transceiver 1010 may perform one or more of the following operations: step 401 and step 402 in the embodiment shown in FIG. 4, step 601 and step 605 in the embodiment shown in FIG. 6, and step 701 and step 703 in the embodiment shown in FIG. 7.

In some embodiments of this application, the processor 1020 and the transceiver 1010 may be configured to perform a function, an operation, or the like performed by the second communication apparatus. The processor 1020 may perform, for example, one or more of the following operations: step 803 in the embodiment shown in FIG. 8. The transceiver 1010 may perform, for example, one or more of the following operations: step 801 and step 802 in the embodiment shown in FIG. 8. The transceiver 1010 is configured to communicate with another device/apparatus through a transmission medium. The processor 1020 receives and sends data and/or signaling through the transceiver 1010, and is configured to implement the method in the foregoing method embodiments. The processor 1020 may implement functions of the processing unit 930, and the transceiver 1010 may implement functions of the receiving unit 910 and the sending unit 920.

Optionally, the communication apparatus 100 may further include at least one memory 1030, configured to store program instructions and/or data. The memory 1030 is coupled to the processor 1020. The coupling in embodiments of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions stored in the memory 1030. At least one of the at least one memory may be included in the processor.

In embodiments of this application, a specific connection medium among the transceiver 1010, the processor 1020, and the memory 1030 is not limited. In embodiments of this application, the memory 1030, the processor 1020, and the transceiver 1010 are connected through a bus 1040 in FIG. 10. The bus is represented by a bold line in FIG. 10. A connection manner of other components is merely an example for description and is not limited thereto. The bus may be classified into an address bus, a data bus, a control bus, and the like. For ease of representation, only one thick line is for representing the bus in FIG. 10, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or a transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

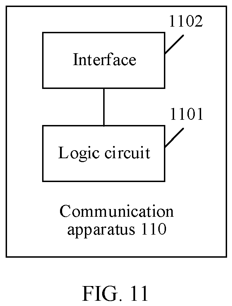

FIG. 11 is a schematic structural diagram of another communication apparatus 110 according to an embodiment of this application. As shown in FIG. 11, the communication apparatus shown in FIG. 11 includes a logic circuit 1101 and an interface 1102. The processing unit 930 in FIG. 9 may be implemented by using a logic circuit 1101, and the receiving unit 910 and the sending unit 920 in FIG. 9 may be implemented by using an interface 1102. The logic circuit 1101 may be a chip, a processing circuit, an integrated circuit, a system on chip (system on chip, SoC), or the like. The interface 1102 may be a communication interface, an input/output interface, or the like. In embodiments of this application, the logic circuit may further be coupled to the interface. A specific connection manner of the logical circuit and the interface is not limited in embodiments of this application.

In some embodiments of this application, the logic circuit and the interface may be configured to perform a function, an operation, or the like performed by the first communication apparatus. In some other embodiments of this application, the logic circuit and the interface may be configured to perform a function, an operation, or the like performed by the first communication apparatus.

This application further provides a computer-readable storage medium. The computer-readable storage medium stores computer code. When the computer code is run on a computer, the computer is enabled to perform the method in the foregoing embodiments.

This application further provides a computer program product. The computer program product includes computer code or a computer program. When the computer code or the computer program is run on a computer, the communication method in the foregoing embodiments is performed.

This application further provides a communication system, including a first communication apparatus and a second communication apparatus.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving, by a first communication apparatus, a measurement signal from a second communication apparatus; and

   sending, by the first communication apparatus, measurement evaluation information to the second communication apparatus, wherein the measurement evaluation information indicates reliability of a measurement result due to a first cause, or the measurement evaluation information indicates that the measurement result is unavailable due to the first cause, and the measurement result is obtained based on the measurement signal.

2. The method according to claim 1, wherein the first cause comprises that communication interference occurs in a process in which the first communication apparatus measures a first parameter based on the measurement signal.

3. The method according to claim 2, wherein that communication interference occurs in a process in which the first communication apparatus measures a first parameter based on the measurement signal comprises:
   the process in which the first communication apparatus measures the first parameter based on the measurement signal is interfered with by a first signal and/or a second signal, the first signal is to interfere with measurement of the first parameter, and the second signal is not to interfere with the measurement of the first parameter.

4. The method according to any one of claims 1 to 3, wherein the measurement evaluation information indicates the reliability of the measurement result due to the first cause; and the measurement evaluation information comprises a first field and a second field, the first field indicates that the measurement result is available, and the second field indicates the reliability.

5. The method according to claim 4, wherein the first field is 0, 1, or a first binary sequence, the first binary sequence comprises two or more bits, M bits in the second field are a binary representation of the reliability, and M is an integer greater than 0.

6. The method according to any one of claims 1 to 3, wherein the measurement evaluation information indicates that the measurement result is unavailable due to the first cause, the measurement evaluation information comprises a first field, the first field indicates that the measurement result is unavailable, the first field is 0, 1, or a second binary sequence, and the second binary sequence comprises two or more bits.

7. The method according to any one of claims 1 to 3, wherein the measurement evaluation information indicates the reliability of the measurement result due to the first cause; and the measurement evaluation information comprises a figure of merit of the measurement result, an eighth bit of the figure of merit is 1, a first bit to a seventh bit of the figure of merit indicate the reliability, and the first bit to the seventh bit are not all 0.

8. The method according to any one of claims 1 to 3, wherein the measurement evaluation information indicates that the measurement result is unavailable due to the first cause, the measurement evaluation information comprises a figure of merit of the measurement result, an eighth bit of the figure of merit is 1, and a first bit to a seventh bit of the figure of merit are all 0.

9. The method according to any one of claims 1 to 8, wherein the measurement evaluation information is carried in multiple access control MAC layer signaling.

10. The method according to claim 9, wherein the measurement evaluation information is carried in a ranging measurement information RMI information element IE.

11. The method according to claim 10, wherein the RMI IE comprises first indication, and the first indication indicates that the RMI IE comprises the measurement evaluation information.

12. The method according to any one of claims 1 to 11, wherein after the receiving, by a first communication apparatus, a measurement signal from a second communication apparatus, the method further comprises:

performing, by the first communication apparatus, an integrity check on the measurement signal to obtain an integrity check score, wherein the integrity check score is positively correlated with integrity of the measurement signal; and

determining, by the first communication apparatus, the reliability based on the integrity check score, wherein the reliability is positively correlated with the integrity check score.

13. The method according to any one of claims 1 to 12, wherein the measurement signal is used to measure the first parameter between the first communication apparatus and the second communication apparatus, and the measurement evaluation information is used by the second communication apparatus to adjust a process in which the first parameter is measured.

14. A communication method, comprising:

sending, by a second communication apparatus, a measurement signal to a first communication apparatus; and receiving, by the second communication apparatus, measurement evaluation information from the first communication apparatus, wherein the measurement evaluation information indicates reliability of a measurement result due to a first cause, or the measurement evaluation information indicates that the measurement result is unavailable due to the first cause, and the measurement result is obtained based on the measurement signal.

15. The method according to claim 14, wherein the first cause comprises that communication interference occurs in a process in which the first communication apparatus measures a first parameter based on the measurement signal.

16. The method according to claim 15, wherein that communication interference occurs in a process in which the first communication apparatus measures a first parameter based on the measurement signal comprises:
the process in which the first communication apparatus measures the first parameter based on the measurement signal is interfered with by a first signal and/or a second signal, the first signal is to interfere with measurement of the first parameter, and the second signal is not to interfere with the measurement of the first parameter.

17. The method according to any one of claims 14 to 16, wherein the measurement evaluation information indicates the reliability of the measurement result due to the first cause; and the measurement evaluation information comprises a first field and a second field, the first field indicates that the measurement result is available, and the second field indicates the reliability.

18. The method according to claim 17, wherein the first field is 0, 1, or a first binary sequence, the first binary sequence comprises two or more bits, M bits in the second field are a binary representation of the reliability, and M is an integer greater than 0.

19. The method according to any one of claims 14 to 16, wherein the measurement evaluation information indicates that the measurement result is unavailable due to the first cause, the measurement evaluation information comprises a first field, the first field indicates that the measurement result is unavailable, the first field is 0, 1, or a second binary sequence, and the second binary sequence comprises two or more bits.

20. The method according to any one of claims 14 to 16, wherein the measurement evaluation information indicates the reliability of the measurement result due to the first cause; and the measurement evaluation information comprises a figure of merit of the measurement result, an eighth bit of the figure of merit is 1, a first bit to a seventh bit of the figure of merit indicate the reliability, and the first bit to the seventh bit are not all 0.

21. The method according to any one of claims 14 to 16, wherein the measurement evaluation information indicates that the measurement result is unavailable due to the first cause, the measurement evaluation information comprises a figure of merit of the measurement result, an eighth bit of the figure of merit is 1, and a first bit to a seventh bit of the figure of merit are all 0.

22. The method according to any one of claims 14 to 21, wherein the measurement evaluation information is carried in multiple access control MAC layer signaling.

23. The method according to claim 22, wherein the measurement evaluation information is carried in a ranging measurement information RMI information element IE.

24. The method according to claim 23, wherein the RMI IE comprises first indication, and the first indication indicates that the RMI IE comprises the measurement evaluation information.

25. The method according to any one of claims 14 to 24, wherein the measurement signal is used to measure the first parameter between the first communication apparatus and the second communication apparatus, and the method further comprises:
the second communication apparatus adjusts, based on the measurement evaluation information, a process in which the first parameter is measured, to obtain a new measurement result.

26. The method according to any one of claims 14 to 25, wherein the reliability is obtained by the first communication apparatus based on an integrity check score of the measurement signal, the reliability is positively correlated with the integrity check score, and the integrity check score is positively correlated with integrity of the measurement signal.

27. A communication apparatus, comprising:

a receiving unit, configured to receive a measurement signal from a second communication apparatus; and
a sending unit, configured to send measurement evaluation information to the second communication apparatus, wherein the measurement evaluation information indicates reliability of a measurement result due to a first cause, or the measurement evaluation information indicates that the measurement result is unavailable due to the first cause, and the measurement result is obtained based on the measurement signal.

28. The apparatus according to claim 27, wherein the communication apparatus further comprises:

a processing unit, configured to perform an integrity check on the measurement signal to obtain an integrity check score, wherein the integrity check score is positively correlated with integrity of the measurement signal, wherein
the processing unit is further configured to determine the reliability based on the integrity check score, wherein the reliability is positively correlated with the integrity check score.

29. A communication apparatus, comprising:

a sending unit, configured to send a measurement signal to a first communication apparatus; and
a receiving unit, configured to receive measurement evaluation information from the first communication apparatus, wherein the measurement evaluation information indicates reliability of a measurement result due to a first cause, or the measurement evaluation information indicates that the measurement result is unavailable due to the first cause, and the measurement result is obtained based on the measurement signal.

30. A computer-readable storage medium, wherein the computer-readable storage medium stores a computer program, wherein the computer program comprises program instructions, and when the program instructions are executed by a processor, the processor is enabled to perform the method according to any one of claims 1 to 26.

Communication
apparatus 1

Communication
apparatus 2

t1

Ranging signal

t2
t3

Ranging signal

t4

FIG. 1

| Bit: 0–2 | 3–4 | 5–6 | 7 |
|---|---|---|---|
| Confidence level | Confidence interval | Confidence interval scaling factor | Extended field |

FIG. 2

Second communication apparatus

Measurement signal

First communication apparatus

FIG. 3

EP 4 451 598 A1

First communication apparatus | Second communication apparatus

Measurement signal 401

Measurement evaluation information 402

FIG. 4

| Availability identifier | Reliability of a measurement result |
|---|---|
| Bit 7 | Bit 6 to bit 0 |

FIG. 5A

| Availability identifier | Reliability of a measurement result |
|---|---|
| Bit 8 | Bit 7 to bit 0 |

FIG. 5B

| Availability identifier | Reliability of a measurement result |
|---|---|
| Bit 8 and bit 7 | Bit 6 to bit 0 |

FIG. 5C

| Availability identifier | Reliability of a measurement result |
|---|---|
| Bit 9 and bit 8 | Bit 7 to bit 0 |

FIG. 5D

29

First communication
apparatus

Second communication
apparatus

Measurement signal 601

602

Perform processing based on the
received measurement signal to
obtain a measurement result

603

Determine reliability of the measurement
result due to a first cause based on the
received measurement signal

604

Generate measurement evaluation
information

Measurement
evaluation information 605

FIG. 6

First communication
apparatus

Second communication
apparatus

Measurement signal 701

702

Generate measurement evaluation
information

Measurement
evaluation information 703

FIG. 7

Second communication apparatus

First communication apparatus

Measurement signal    801

Measurement evaluation information    802

803

Adjust, based on the measurement evaluation information, a process in which a first parameter is measured, to obtain a new measurement result

FIG. 8

900

910    930

Receiving unit

Processing unit

920

Communication apparatus

Sending unit

FIG. 9

Communication apparatus 100

1010    1020

Transceiver

Processor

1040

1030

Memory

FIG. 10

FIG. 11

## INTERNATIONAL SEARCH REPORT

| | International application No. |
|---|---|
| | **PCT/CN2023/071218** |

**A. CLASSIFICATION OF SUBJECT MATTER**

H04L5/00(2006.01)i;H04W24/08(2009.01)i

According to International Patent Classification (IPC) or to both national classification and IPC

**B. FIELDS SEARCHED**

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

EPODOC, WPI, CNPAT, CNKI: 测量, 距离, 测距, 到达角, 评估, 质量, 可信度, 不可用, 原因, 干扰, 因素, TOA, measure, assess, evaluate, quality, interference, reason, cause, reliability, confidence

**C. DOCUMENTS CONSIDERED TO BE RELEVANT**

| Category* | Citation of document, with indication, where appropriate, of the relevant passages | Relevant to claim No. |
|---|---|---|
| X | CN 108291956 A (KONINKL PHILIPS NV) 17 July 2018 (2018-07-17)<br>description, paragraphs [0084]-[0122], claim 1, and figures 1, 5, and 7 | 1-30 |
| A | CN 106413050 A (HARBIN INSTITUTE OF TECHNOLOGY, WEIHAI) 15 February 2017 (2017-02-15)<br>entire document | 1-30 |
| A | CN 107229045 A (HARBIN INSTITUTE OF TECHNOLOGY, WEIHAI) 03 October 2017 (2017-10-03)<br>entire document | 1-30 |
| A | CN 112205021 A (SHENZHEN UNIVERSITY) 08 January 2021 (2021-01-08)<br>entire document | 1-30 |
| A | US 2010202303 A1 (GU, Ning et al.) 12 August 2010 (2010-08-12)<br>entire document | 1-30 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 February 2023** | **20 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.

**PCT/CN2023/071218**

| Patent document cited in search report | | | Publication date (day/month/year) | Patent family member(s) | | | Publication date (day/month/year) |
|---|---|---|---|---|---|---|---|
| CN | 108291956 | A | 17 July 2018 | CA | 3006964 | A1 | 08 June 2017 |
| | | | | EP | 3384310 | A1 | 10 October 2018 |
| | | | | WO | 2017093043 | A1 | 08 June 2017 |
| | | | | US | 2018356490 | A1 | 13 December 2018 |
| | | | | JP | 2019501377 | A | 17 January 2019 |
| CN | 106413050 | A | 15 February 2017 | | None | | |
| CN | 107229045 | A | 03 October 2017 | | None | | |
| CN | 112205021 | A | 08 January 2021 | WO | 2021243629 | A1 | 09 December 2021 |
| US | 2010202303 | A1 | 12 August 2010 | WO | 2008145062 | A1 | 04 December 2008 |
| | | | | CN | 101064963 | A | 31 October 2007 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210043549